(19) **Europäisches Patentamt**

**European Patent Office**

**Office européen des brevets**

(11) **EP 4 264 877 B1**

(12) **EUROPEAN PATENT SPECIFICATION**

(45) Date of publication and mention
of the grant of the patent:
**29.01.2025 Bulletin 2025/05**

(21) Application number: **21834764.9**

(22) Date of filing: **08.12.2021**

(51) International Patent Classification (IPC):
*H04L 9/08* (2006.01)    *H04L 9/32* (2006.01)
*H04L 9/40* (2022.01)    *G06F 21/31* (2013.01)
*G06F 21/62* (2013.01)

(52) Cooperative Patent Classification (CPC):
**H04L 9/085; G06F 21/31; H04L 9/3231;
H04L 63/0823; H04L 63/083; H04L 63/0861;**
G06F 2221/2115; H04L 2463/082

(86) International application number:
**PCT/EP2021/084707**

(87) International publication number:
**WO 2022/128659 (23.06.2022 Gazette 2022/25)**

(54) **PASSWORD MANAGEMENT SYSTEM, DEVICE AND METHOD OF THE SAME**

PASSWORTVERWALTUNGSSYSTEM, VORRICHTUNG UND VERFAHREN DAFÜR

SYSTÈME DE GESTION DE MOT DE PASSE, DISPOSITIF ET PROCÉDÉ ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2020 NL 2027136**

(43) Date of publication of application:
**25.10.2023 Bulletin 2023/43**

(73) Proprietor: **Mindyourpass Holding B.V.
5644 DD Eindhoven (NL)**

(72) Inventor: **DE JONGE, Merijn
5644 DD Eindhoven (NL)**

(74) Representative: **DeltaPatents B.V.
Fellenoord 370
5611 ZL Eindhoven (NL)**

(56) References cited:
**WO-A1-2015/025232    US-B1- 10 516 527
US-B1- 9 104 889**

Processed by Luminess, 75001 PARIS (FR)

**Description**

**TECHNICAL FIELD**

The invention relates to a password management system, a password management device, a password management server, a password management method, an enrolment device and a method for enrolling a device in the password management system.

**BACKGROUND**

In recent years, an increasing number of services and systems have been digitized, which users access via online accounts. A growing number of new services are also emerging, which also require a user to register with an account. As the number of online services grows, a user may be expected to remember a steadily increasing number of passwords associated with each of their myriad online accounts. Additionally, hackers are becoming more and more skilled in breaching secure sites and accessing personal information, and online services have thus begun to introduce more and more stringent password requirements for users as a way of mitigating data breach risks.

The growing number of passwords a user is required to remember, and their increasing complexity, presents a challenge for many users. In many cases, users simply attempt to use a single password for multiple accounts, which alleviates the mental burden of remembering multiple complex passwords. However, such a solution inherently introduces a security risk. Once the password for one account is obtained, access to all accounts may be achieved. Moreover, the same password may not be suitable for all of the multitude of online services, as each service may have different password requirements - for example, a first service may require a password without special characters, whilst a second service may require at least one special character. In this example, the same password could not be used by the user for both services.

There exist password managers which manage passwords for multiple online accounts associated with a single user. The multiple passwords may be stored locally or in the cloud and are typically encrypted such that they can be accessed by a single master password. This offers the advantages that the user need not remember the password for each service, allowing more complex strings to be used, although in practice more complex strings are not always used. A password manager may be used on multiple devices, facilitating easier login from a range of user devices. However, if the password manager is hacked, e.g. if the master password is discovered or obtained, then all accounts in the password manager may be compromised. There is then no way to invalidate all of the compromised passwords.

There may also be limitations on password strength imposed by an online service. For example, biometrics is now considered a secure means for access control that does not rely on user memory, although many online services do not have the capability or resources to exploit the use of biometrics for account logins.

European patent EP 3476077 B1 describes a password generation device and method in which a computer address, a user identifier and a user password are used to generate a password for a service. The computer address may be one of multiple computer addresses which are mapped to a single base address and corresponding base system identifier, and the user identifier may be mapped to a user system identifier. The base system identifier and the user system identifier may be combined to generate a combined identifier which may serve as a password or from which a password may be generated. This system provides the advantage that in the case of a security breach, an entire class of passwords may be invalidated simply by changing one or more of the system identifiers (e.g. the user system identifier or the base system identifier). However, the password generation is dependent on the user inputting a single password - that is, a text-based password input. This can present a challenge to users with different accessibility needs and users of devices without, for example, an easily accessible keyboard. Some devices, for example, have increasingly small screens or input means, which can introduce additional challenges to users with visual impairment, reduced fine motor skills and the like. Moreover, the security is limited by the use of a single password and a single type of authentication. The benefits of newer, more secure authentication mechanisms with which devices are increasingly outfitted are not used.

US patent 9104889 constitutes further relevant prior art. A first component of a cryptographic key is received from a user via a user interface of a user computing device. A second component of the cryptographic key is received via a short-range communication interface that communicatively couples the user computing device to a physically separate storage device. The cryptographic key is generated based at least on the first component and the second component.

There is therefore a need to develop a password management system which can overcome these widely varying accessibility challenges whilst also improving the security of the user's passwords.

**SUMMARY**

It would be advantageous to have a password management system and method for reconstructing a password for accessing a password-protected resource, such as a service, which enables a user to use a variety of authentication types and which maintains or increases the security of the password management system.

A password management system is provided, addressing some of the concerns mentioned herein. The password management system for reconstructing a password for accessing a password-protected resource comprises

- a client device comprising:

  - a client-side communication interface configured to:

    - receive an authentication input from a user of the client device, and
    - send, to a server device of the password management system, application information indicating the password-protected resource for which password reconstruction is requested; and

  - a client-side processor system configured to:

    - apply a non-invertible deterministic function to the authentication input to obtain a protected authentication input;

- the server device comprising:

  - a database storage configured to store a database comprising stored password factors for corresponding protected authentication inputs, wherein a same user-based password component is obtained from each of the stored password factors and the corresponding protected authentication input;
  - a server-side communication interface configured to:

    - receive, from the client device, the application information, and
    - retrieve, from the database, the stored password factor corresponding to the protected authentication input; and

  - a server-side processor system configured to:

    - compute an application-based password component from the application information;

wherein the client-side processor system or the server-side processor system is further configured to reconstruct a password by:

- calculating a user-based password component by combining the retrieved stored password factor and the protected authentication input using an invertible, deterministic function; and
- combining the user-based password component and the application-based password component to generate the password.

The password management system may be configured to calculate, either on the client device or on the server device, a user-based password component. The user-based password component may be combined with an application-based password component calculated on the server side, and the password may be generated from the combination. In some embodiments, the combination itself may be used as the password, and in other embodiments, further processing may be performed on the combination to arrive at the password. For example, in some embodiments, password limitations such as requirements relating to password creation of an account for accessing a password-protected resource may be used to further adjust the password, for example by changing the length, types of characters and the like.

The password management system improves security by distributing the reconstruction of the password. Components used to generate the password are distributed across the client device and the server, meaning that if either of these elements become compromised, the user's password(s) for password-protected resource(s) are not directly obtainable from the components on the compromised device/server. That is, a data breach on the server or on the client device would not compromise the user's various online accounts.

In some embodiments, the password management system is configured to compute the user-based password component on the client device. In such cases, the protected authentication input do not need to be transmitted to the server device, which reduces the risk of the protected authentication input being obtained by a malicious party, for example via interception.

The database storage of the server device is configured to store a database comprising stored password factors for corresponding protected authentication inputs. That is, the authentication input obtained by the client device may have a corresponding stored password factor. By combining the protected authentication input with the corresponding stored password factor, the user-based password component may be obtained. Each stored password factor is initially computed to ensure that the same user-based password component is obtained when the stored password factor is combined with its associated protected authentication input. That is, the stored password factors on their own do not contain authentication information, but enable multiple authentication types and/or devices to be used to obtain the same user-based password component. This enables a user to make use of any authentication input capabilities offered by their device(s).

A method for generating a password or for enrolling a device according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code stored on a computer readable medium for performing a method according to the invention when said program product is executed on a computer.

In a preferred embodiment, the computer program comprises computer program code adapted to perform all the steps of a method according to the invention when the computer program is run on a computer. Preferably, the computer program is embodied on a computer readable medium.

The invention is defined by the claims as appended.

BRIEF DESCRIPTIONS OF DRAWINGS

These and other aspects of the invention are apparent from and will be elucidated with reference to the embodiments described hereinafter. In the drawings,

Figure 1 schematically shows an overview of an environment for a password management system,
Figure 2 schematically shows an example of an embodiment of a password management system,
Figure 3 schematically shows an example of an embodiment of password factors associated with authentication inputs for use in a password management system,
Figure 4 schematically shows an example of an embodiment of a method of enrolling a device in a password management system,
Figure 5 schematically shows an example of an embodiment of a method of enrolling a device in a password management system,
Figures 6a and 6b schematically show examples of embodiments of a password reconstruction method,
Figures 7a and 7b schematically show examples of embodiments of a method of adjusting a reconstructed password,
Figure 8 schematically shows a computer readable medium having a writable part comprising a computer program according to an embodiment, and
Figure 9 schematically shows a representation of a processor system according to an embodiment.

It should be noted that items which have the same reference numbers in different Figures, have the same structural features and the same functions, or are the same signals. Where the function and/or structure of such an item has been explained, there is no necessity for repeated explanation thereof in the detailed description.

Reference signs list

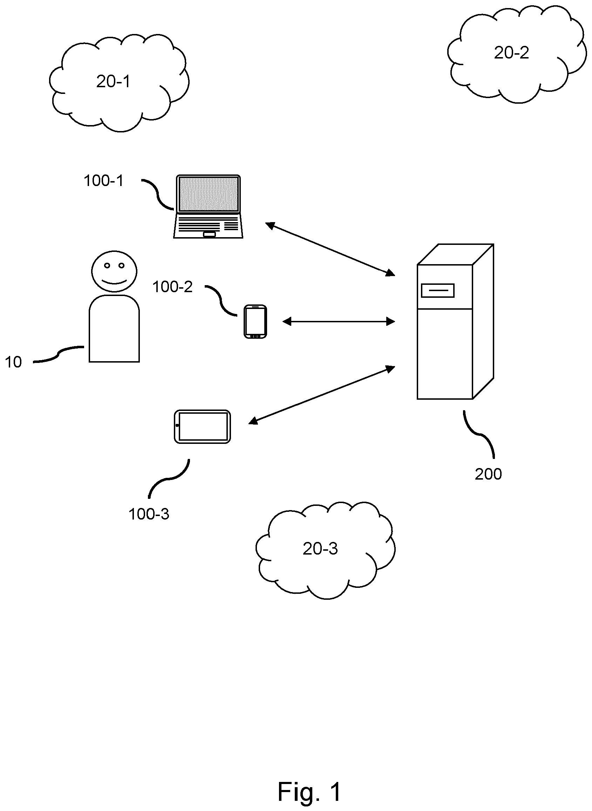

The following list of references signs of elements shown in Figures 1-3 and 8-9 is provided for facilitating the interpretation of the drawings and shall not be construed as limiting the claims.

10      a user
20      a password-protected resource
30      a password management system
100     a client device
120     a client-side communication interface
130     a client-side processor system
140     a client-side protected storage
200     a server
210     a database storage
215     a database
220     a server-side communication interface
230     a server-side processor system
310     an authentication input
320     a stored password factor

330     an invertible, deterministic function
340     a user-based password component
800     a computer-readable medium
810     a writable part
820     a computer program
910     an integrated circuit
920     a processing unit
922     a memory
924     a dedicated integrated circuit
926     a communication element
930     an interconnect
940     a processor system

## DESCRIPTION OF EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

**Figure 1** schematically shows an overview of an environment for a password management system. A user 10 may have one or more devices 100 through which they may access one or more password-protected resources 20.

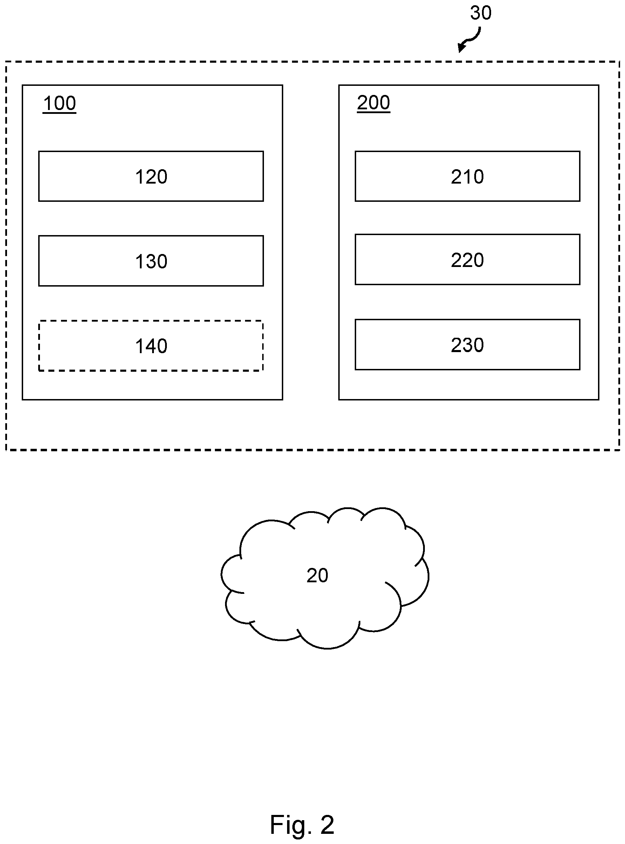

The password management system may comprise a server 200 and at least one client device 100. The password management system, the server 200 and the client device 100 will be described in detail with reference to Figure 2.

For example, user 10 may have a mobile phone 100-2, a laptop 100-1 and a tablet 100-3, and may wish to access a multitude of online password-protected resources from one or more of these devices. Password-protected resources may include, for example, a social media network, a banking application, an email application, a media provider, an online shopping service and the like. Further password-protected resources may provide access to files, databases, health information, digital records, and so on. It is to be understood that the examples of password-protected resources provided herein are merely exemplary and non-limiting.

User 10 may have an account with a password management system hosted on a server 200. For a particular password-protected resource with which the user 10 has an account, the password management system is configured to generate the same password for the user 10 from any of their enrolled devices. For example, the user 10 may obtain their password for a first password-protected resource 20-1 from any one of their devices 100-1, 100-2 and 100-3.

A password may be any authentication token. Some password-protected resources typically require a combination of a username and password - the combination of which may be referred to as the user identifier. In such cases, both the password in the combination and the user identifier itself may be considered authentication tokens. For example, the password reconstructed by the password management system may be a user identifier, which may be, for example, a strong user identifying string. In some cases, the password, or user identifier, may be sufficient to access a password-protected resource, e.g. without also providing a username. The password reconstructed by the password management system may be the password component of the user identifier, or the password may be the user identifier itself, e.g. removing the need for a separate username.

Some of the client devices 100, may be configured to accept one or more types of authentication. For example, client device 100-2 may be configured to accept a fingerprint authentication and a textual authentication, e.g. input via a keyboard or touchscreen, whilst client device 100-3 may be configured to use facial recognition. In some embodiments, the password management system is configured to reconstruct the same password using information on the authentication input, such as an authentication type, and/or a device identifier. An authentication type may be, for example, fingerprint authentication, facial recognition authentication and the like. For example, user 10 may access a social media network 20-1 from their mobile phone 100-2 using fingerprint authentication and from their tablet PC 100-3 using facial recognition. In this example, the same password may be generated by the password management system. Moreover, a single device may be configured to accept multiple authentication means. For example, mobile phone 100-2 may be configured to accept fingerprint authentication, facial recognition, voice recognition and a text-based authentication input (e.g. password). The user 10 may obtain the same password for social media network 20-1 using any of these authentication types. A client device 100 may also, or alternatively, use continuous authentication, which may continuously re-verify the identity of the user of the client device 100, for example by monitoring the behaviour of the user with the client device 100 and the use of the client device 100. In some embodiments, the authentication input may be obtained without a user input. For example, the authentication input may be obtained through system authentication without user involvement. The authentication input may, in these cases, be a certificate or the like.

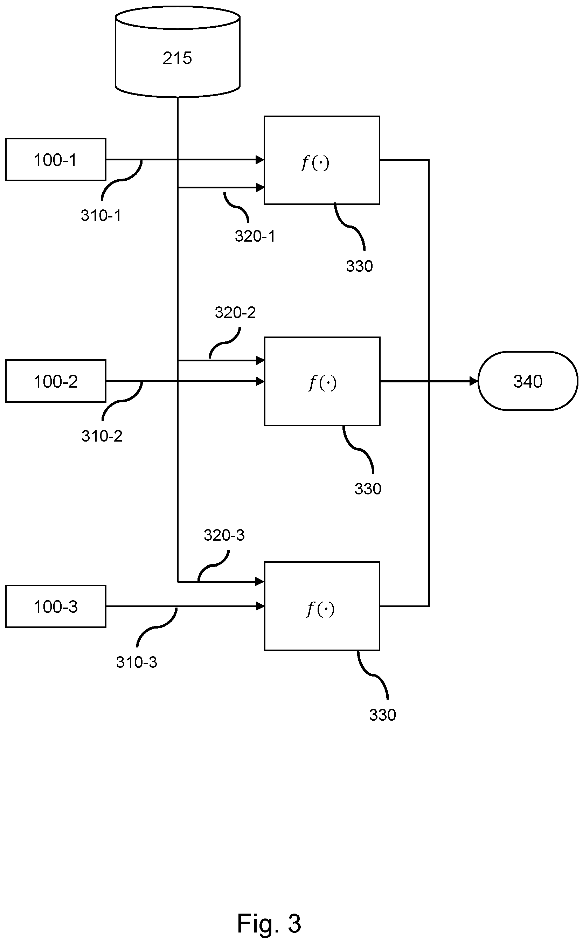

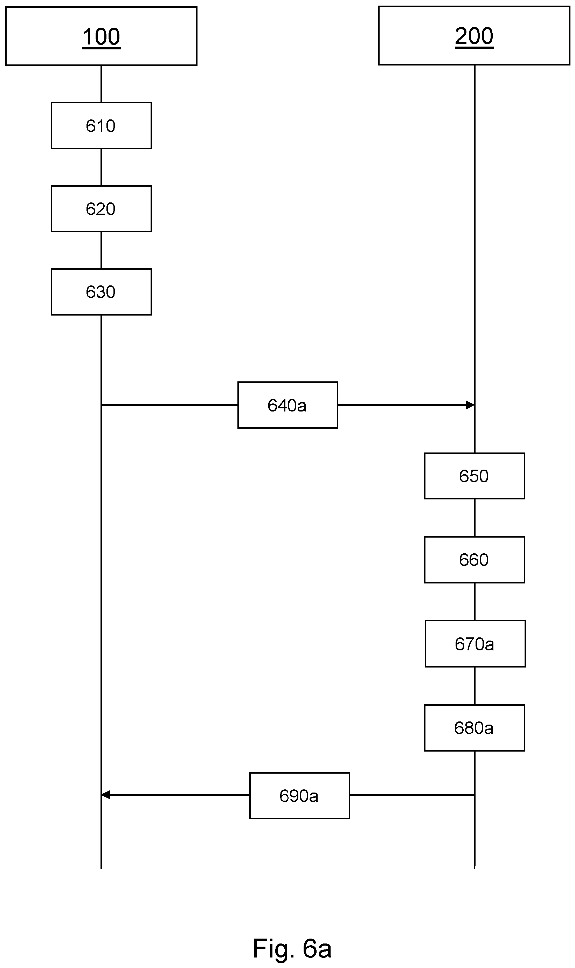

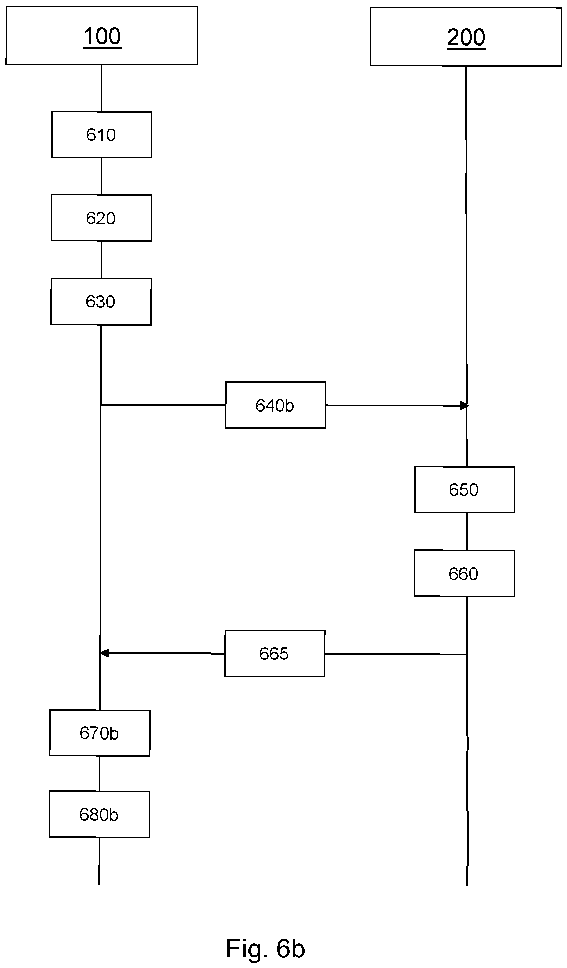

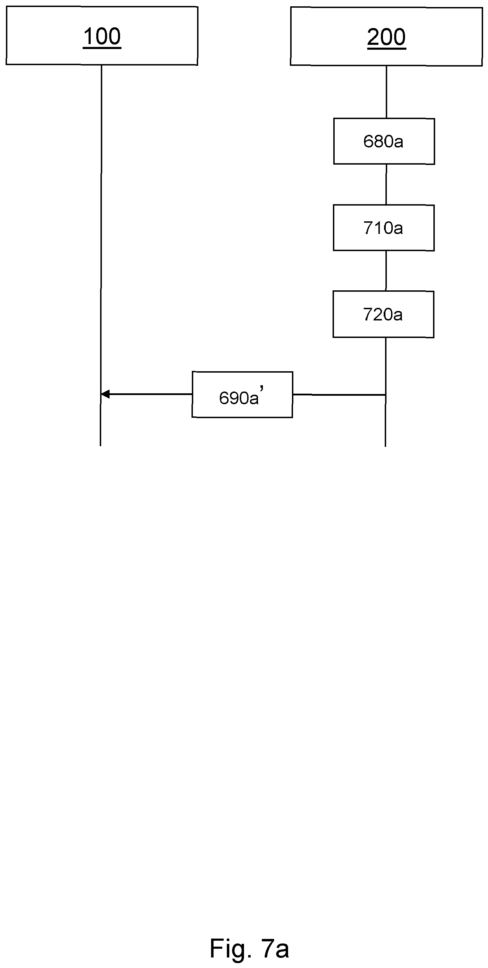

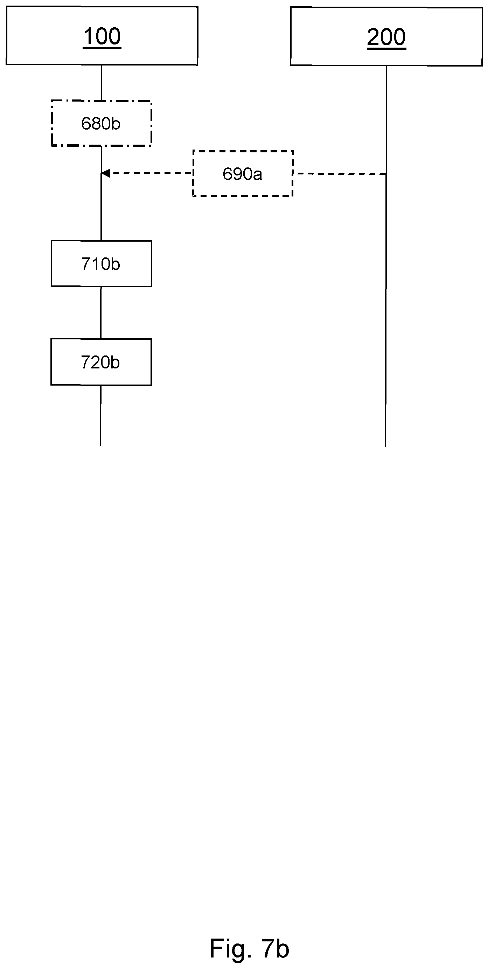

Prior to reconstructing a password through the password management system, a client device 100 may be enrolled in the password management system. For example, a user 10 may have an account with the password management system. Each client device that the user 10 wishes to use in conjunction with the password management system may be enrolled with the user's account in the password management system. The user 10 may enrol more than one client device 100. In some embodiments, a single device 100 may be enrolled with multiple authentication types. For example, a user's mobile phone may be enrolled first using a text-based password, and again using a fingerprint authentication. A method of enrolling a device with the password management system will be described in detail with reference to Figures 3 to 5. The method of generating the password will be described in detail with reference to Figures 6a, 6b, 7a and 7b.

**Figure 2** schematically shows an example of an embodiment of a password management system. Password management system 30 may comprise a server 200 and at least one client device 100. Password management system 30 may take the form of an application, a browser plug-in, an extension and/or the like. Although in Figure 2 only one client device 100 is shown, it is to be understood that this is for the sake of simplicity and illustration, and multiple client devices of a single user 10 may be included in the password management system. The client device 100 and/or the server 200 may be configured to communicate with a password-protected resource 20.

The client device 100 may comprise a client-side communication interface 120 and a client-side processor system 130, and in some embodiments, a protected storage 140. The server 200 may comprise a database storage 210, a server-side communication interface 220 and a server-side processor system 230.

The client-side communication interface 120 may be configured to receive, from another device such as client device 100-2, a request for generating a password for a password-protected resource. That is, another device may request the client device 100 to reconstruct a password for accessing a password-protected resource 20. This is a form of multi-factor authentication (MFA) where the second factor is integrated in the password generation process. That is, the systems and methods described throughout this disclosure may be implemented in a multi-factor authentication system or method.

The client-side communication interface 120 may be configured to receive user input, including an authentication input, from a user of the device 100, e.g. user 10. The client-side communication interface 120 may be further configured to communicate with the server 200 and at least one password-protected resource 20.

The authentication input may comprise, for example, a string of characters, a vector, a number, and in some embodiments the authentication input may have a minimum number of bits.

The client-side processor system 130 may be configured to compute a protected authentication input. In some embodiments, a non-invertible, deterministic function may be applied to a received authentication input to obtain the protected authentication input. The non-invertible, deterministic function may be, for example, a key derivation function, such as a hash function, or an encryption function.

The database storage 210 of the server 200 may be configured to store a database for one or more password factors for corresponding protected authentication inputs. The database may associate each stored password factor with an authentication type of the protected authentication input and/or a device identifier identifying the client device 100 used to obtain the authentication input. That is, in some embodiments, the client-side communication interface may be configured to send, to the server, information on the authentication input such as the authentication type of the authentication input and/or a device identifier identifying the client device 100. In some embodiments, the server-side communication interface 220 may retrieve a stored password factor using one or more of an authentication type and a device identifier. Database storage 210 may be stored remotely, such as in a remote storage, in the cloud or in a distributed fashion, or database store 210 may be stored within the hardware of the server 200, for example in local memory.

The server-side communication interface 220 may be configured to communicate with the client device 100 and, in some embodiments, a password-protected resource 20.

## Enrolment

A client device 100 may be enrolled with the password management system 30 prior to use in reconstructing a password. The user 10 may be registered with an account in the password management system 30.

The client-side communication interface 120 may be configured to receive an authentication input from a user of the client device 100, e.g. user 10. The authentication input may be in the form of, for example, a text-based password, for example input via a keyboard or touch input, or a biometric input, such as a fingerprint, facial recognition or retinal scan. In some embodiments, the authentication input may be a certificate, which may allow for authentication without user input. The authentication input has a corresponding authentication type. The authentication type indicates a type of authentication input, such as a fingerprint, text-based password input, touch input, swipe input, facial recognition, speech or voice recognition, retinal scan and the like.

The client-side communication interface 120 may be configured to send a message to the server 200, for example to request enrolment of the device. In some embodiments, the message may include the authentication type associated with the authentication input. In some embodiments, a device identifier may also or alternatively be transmitted to the server 200. The device identifier may be an identification code uniquely identifying the device 100.

The message may comprise a request to check if the user 10 has any previous enrolments, such as any devices previously enrolled, in their account with the password management system.

Upon receiving the message, the server 200 may check whether there is already a device previously enrolled in the user's account, for example by checking the database for existing entries associated with the user's account. The server, e.g. the server-side communication interface 220, may respond to the client device 100 to indicate whether there is a device already enrolled with the user's account.

If the user's account has no previous enrolments, the client device 100 may perform a first-time enrolment.

The client-side processor system 130 may be configured to generate a user-based password component by randomly generating a number. The client-side processor system 130 may be further configured to compute, from the protected authentication input and the randomly generated number, a password factor (PF). This is schematically shown in the equation below:

$$PF = f(input) + randomly\ generated\ number$$

where *input* represents the authentication input, and *f(input)* represents the protected authentication input, the function $f(\cdot)$ being the non-invertible deterministic function. The function may comprise including a seed to the authentication input before applying a non-invertible deterministic function. In some embodiments, the seed associated with the user's password management system account may be obtained from the server 200. The non-invertible function may be, for example, a hash function. The protected authentication input may be a string, a vector, or the like, and in some embodiments, the protected authentication input may have a minimum and/or maximum length.

Although the above equations depict the use of addition to obtain the password factor from the randomly generated number and the protected authentication input, it is to be understood that any invertible, deterministic function may be used. For example, the invertible, deterministic function may comprise an arithmetic operation such as addition or subtraction, a geometric operation, ring addition, convolution, and so on.

Once the password factor is determined, the client-side communication interface 120 may be configured to transmit the password factor to the server 200, along with the associated authentication type. When enrolling a first device, e.g. when no previous devices are enrolled for a user's account with the password management system, it is preferable that the authentication input is a text-based password. In some examples, however, a swipe input or speech input may be used. The server 200 may be configured to store the received password factor in the database such that the password factor is associated with the user's account and one or more of the authentication type and a device identifier.

If there is a previous enrolment, e.g. a device previously enrolled with the password management system in the user's account, the client-side communication interface 120 may be configured to prompt the user to input a previous authentication input associated with the previously enrolled device. For example, if the previously enrolled device was enrolled with a text-based password, the client device 100 may prompt the user for a text-based password. If there are multiple devices previously enrolled with the user's account, one of the multiple previously enrolled devices may be selected or designated as a default device for facilitating new enrolments, such as by selecting a device associated with a text-based authentication type, for example a password, or a touch or swipe input. Examples of touch inputs or swipe inputs may be a passcode, a pattern dragged on an 7-segment, a swipe connecting a plurality of dots or pattern elements or the like.

The server 200 may provide, e.g. via the server-side communication interface 220, the client device 100 with a stored password factor associated with the previous enrolment, or in the case of multiple previous enrolments, a stored password factor associated with a selected or default previous enrolment. The stored password factor may be retrieved from the database storage 210. The client-side processor system 130 may be configured to compute a previous protected authentication input by applying a non-invertible, deterministic function, such as a key derivation function or an encryption function, to the previous authentication input obtained from the user via the client-side communication interface 120. From the previous protected authentication input and the received previous password factor, the client-side processor system 130 may be configured to calculate a user-based password component. Then, the client-side processor system 130 may be configured to calculate a password factor associated with the client device 100 (e.g. the device being enrolled) from the protected authentication input and the calculated user-based password component. This is illustrated in the following equations, in which subscript '1' is used to denote terms associated with the previously enrolled device and subscript '2' is used to denote terms associated with the client device 100, e.g. the device being enrolled.

Using the following two equations, the user-based password component may be calculated using the protected authentication input of the previous enrolment and the password factor associated with the previous enrolment. The user-based password component may then be used to calculate the password factor $PF_2$ for the current enrolment (that is, for the authentication or device being enrolled), as shown in the third equation:

$$PF_1 = f(input_1) + UserPassComponent$$

$$UserPassComponent = PF_1 - f(input_1)$$

$$PF_2 = f(input_2) + UserPassComponent$$

In other words, the password factor associated with the client device 100 is determined such that the same user-based password component (*UserPassComponent*) may be computed from the password factor and the protected authentication input.

In some embodiments, the function *f(input)* may comprise adding a seed to the input before applying the non-invertible, deterministic function. The seed may be retrieved, e.g. from a database such as the database stored in database storage 210.

In the above equations, although a simple addition is depicted for combining the protected authentication input (*f(input_i)*) and the user-based password component, it is to be understood that any invertible, deterministic function may be used.

This construction is illustrated in **Figure 3.** Referring now to Figure 3, a system with three client devices, e.g. client device 100-1, 100-2 and 100-3, is shown. Database 215 is shown, which may be stored in the database store 210 of the server 200. Each client device 100-1, 100-2 and 100-3 may be used to provide a respective authentication input 310-1, 310-2, 310-3, which may be the protected authentication input. In some embodiments, a single client device may be enrolled with multiple authentication types. In other words, client device 100-1 and client device 100-2 may be the same client device, and may refer to different authentication inputs of different authentication types. For example, client device 100-1 as shown in Figure 3 may refer to a user's mobile phone in which a password is used as the authentication input, thereby having a text-based, or password, authentication type, whereas client device 100-2 may refer to the same physical device, the user's mobile phone, in which a fingerprint is used as the authentication input, thereby having a fingerprint or biometric authentication type.

For each authentication type and/or each device, an associated stored password factor may be retrieved from the database 215. In other words, a stored password factor may be retrieved using an authentication type and/or a device identifier. For example, stored password factor 320-1 may be associated with the authentication type of authentication input 310-1, stored password factor 320-2 may be associated with the authentication type and the device used to obtain authentication input 310-2, and stored password factor 320-3 may be associated with the authentication type of authentication input 310-3. This is illustrated in Table 1 below.

**Table 1: Stored password factors**

| Authentication type | (Device ID) | Stored password factor |
| --- | --- | --- |
| Password | -- | PF1 |
| Fingerprint | Device-ID (100-1) | PF2 |
| Fingerprint | Device-ID (100-3) | PF3 |
| Facial recognition | Device-ID (100-1) | PF4 |
| Facial recognition | Device-ID (100-2) | PF5 |
| -- | Device-ID (100-4) | PF6 |

The stored password factors may be stored locally in the server 200, e.g. in a database of the database storage 210, or in a remote database such as in a cloud-based storage resource.

As shown in Table 1, a first password factor, PF1, may be stored, associated with the authentication type denoted by password. A second password factor, PF2, associated with a fingerprint authentication on a first client device, may also be stored, whilst a third password factor, PF3, may be a different password factor associated also with a fingerprint authentication but on a different client device (e.g. client device 100-3). The first client device, e.g. client device 100-1, may also have an associated password factor PF4 stored in the database, associated with a facial recognition authentication type. In some embodiments, a client device identification on its own may be used to obtain the corresponding stored password factor. For example, if a client device has only a single authentication or if the client device only has the capability for a single type of authentication, the database may not store the authentication type and instead the client device identifier is used to retrieve the stored password factor. This is shown in the last row of Table 1. A client device denoted 100-4 in the table below may be associated with stored password factor PF6. The password factors may be strings, vectors, arrays, or the like. In some embodiments, the password factors may have a minimum bit length, maximum bit length or the like.

In each case, the authentication input 310 and the associated stored password factor 320 may be combined in a function 330 to obtain the same output, the user-based password component 340. In other words, function 330 may be used to combine authentication input 310-1 and stored password factor 320-1 to obtain the user-based password component 340. The same user-based password component 340 may also be obtained when the function 330 is applied to the authentication input 310-2 and associated stored password factor 320-2, and when the function 330 is applied to the authentication input and associated stored password factor 320-3.

The authentication inputs 310 themselves need not be used to retrieve the associated stored password factor 320 from the database 215. In some embodiments, the authentication type and/or a device identifier may be used to retrieve the stored password factor 320. A device identifier may be used, for example, in embodiments where a single authentication type results in different authentication inputs being obtained depending on the client device. In some embodiments, the transmission of the authentication input 310 itself, which may be the protected authentication input, may therefore be avoided, and the associated risk of interception may be mitigated.

Referring once again to Figure 2, once the password factor is determined for the client device 100, the client-side communication interface 120 may be configured to transmit the password factor to the server 200. The server 200 may be configured to store the received password factor in the database of the database storage 210, such that the password factor is associated with the protected authentication input used during the enrolment. In some embodiments, a device identifier and/or an authentication type of the authentication input may also be associated with the password factor in the database. In some embodiments, a confirmation message may be transmitted from the server 200 to the client device 100 to confirm successful enrolment.

The types of authentication input accepted may be based on the capabilities of the client device 100. For example, a mobile phone may be equipped with biometric authentication means, such as fingerprint scanning, facial recognition, speech and/or voice recognition and the like, as well as keyboard and/or touch input and so on. Biometric inputs, such as fingerprint scanning, may be used to access a protected storage 140 of the client device 100. In some embodiments, the authentication input may comprise a string stored in the protected storage 140, accessed via authentication through a fingerprint scan. In some embodiments, the contents of the protected storage 140 may differ from one device to another. For example, a fingerprint scan used for authentication on a first client device, e.g. client device 100-2, may provide access to the protected storage 140 of said device, in which a first string is stored. A fingerprint scan used for authentication on a second client device, e.g. client device 100-3, may provide access to its own protected storage 140 in which a different string is stored. Thus the password factor associated with a fingerprint authentication in the first device, e.g. client device 100-2, may be different from the password factor associated with a fingerprint authentication in the second device, e.g. client device 100-3. In some embodiments, therefore, a device identifier may be transmitted from the client device 100 to the server 200 during enrolment and stored in the database of database storage 210, such that the stored password factor is associated with the device identifier.

*Example*

For the sake of illustration, a practical example is introduced. This example will be referred to throughout the present disclosure.

User 10 has an account with the password management system and wishes to use the password management system on his mobile phone. At this stage in the example, the user 10 has no previous enrolments in his password management system account.

For the first enrolment for user 10, user 10 may log into the password management system, via an app on his mobile phone or through an extension, for example a downloadable browser extension, widget or the like. The user 10 may provide an authentication input in the form of a password, input via the touchscreen keyboard of his mobile phone. Upon obtaining the password, the user's mobile phone may calculate a protected authentication input from the password and as described above, may randomly generate a number as the user-based password component 340. The user's mobile phone may then compute the password factor as described above. By doing so, the user-based password component 340 does not need to be stored, either at the client device or at the server device, which improves the security of the system. The user-based password component 340 can be reconstructed as described above from values distributed over the client device 100 and the server 100, which removes the need for storing the user-based password component 340. Alternatively, the user's mobile phone may randomly generate the password factor and compute the user-based password component 340 from the randomly generated password factor and the protected authentication input.

The user's mobile phone may then transmit the password factor, along with an indication that the password factor corresponds to an authentication type and/or a device, to the server 200, and the enrolment is complete.

The user may then decide that inputting a password is inconvenient, or difficult, or may decide to make use of the biometric capabilities of his mobile phone. The user may therefore decide to also enrol a fingerprint authentication, since his mobile phone is equipped with fingerprint verification means.

To do so, the user may again log into the password management system and may enrol a further authentication. In this case, the user may provide a fingerprint as an authentication. His mobile phone may verify that the received fingerprint matches fingerprint data stored in the mobile phone, and upon determining that the received fingerprint matches the fingerprint data, may provide access to a protected storage such as a vault, on the mobile phone. The protected storage, or vault, may store a vector, string or array which may be used as the authentication input. The authentication input may be a value which has previously been randomly generated, for example. The mobile phone may then compute a protected authentication input from the, e.g. vector, stored in the protected storage. In some cases, the protected authentication input may be identical to the authentication input.

Since the user 10 already has an existing enrolment in the password management system, the user 10 may be prompted to input his previous authentication, e.g. the password used in the first enrolment. Once the user 10 inputs the password used in the previous enrolment, the mobile phone may send a request to the server 200 for the password factor associated with the password-based authentication. That is, the password itself need not be sent. It is sufficient for the user's mobile phone to send an indication of the type of authentication used (e.g. a password, or a text-based input, or the like). The server 200 may then retrieve the stored password factor associated with a password authentication and may transmit the retrieved stored password factor to the user's mobile phone. The user's mobile phone may then compute a protected authentication input from the password received from the user, and then compute the user-based password component from the received stored password factor and the protected authentication input computed from the password. Once the user-based password component is computed, the mobile phone may compute a further password factor, associated with the fingerprint authentication, from the user-based password component and the protected authentication input computed from the, e.g. vector obtained using the fingerprint authentication. The mobile phone may then transmit the further password factor, along with an indication of the associated fingerprint authentication type, to the server 200. The mobile phone may also transmit a device identifier which can be used to identify the mobile phone.

## Reconstructing a password

The password management system may be used to reconstruct a password for accessing a password-protected resource 20.

A user 10 may wish to log into, or create an account with, a password-protected resource 20, which may be for example, a banking application, a social network application, an online shopping application or the like. The password management system may be configured to compute a plurality of components or factors used to reconstruct a password, and said components or factors may be stored or computed in a distributed fashion. For example, at least one component or factor used to reconstruct the password may be stored or computed on the client device 100, whilst at least one component or factor used to reconstruct the password may be stored or computed on the server 200. By distributing the components or factors used to reconstruct the password, the password may be kept secure even if one of the devices becomes compromised.

The client-side communication interface 120 may be configured to obtain application information, e.g. information about the password-protected resource 20. The application information may comprise, for example, a unique resource location (URL) for the password-protected resource. Additionally, the client-side communication interface 120 may be configured to obtain an authentication input from the user 10 of the client device 100. The authentication input may comprise, for example, a password input into a touch screen or a keyboard of the client device 100. In some embodiments, the authentication input may be obtained using a biometric input, such as a fingerprint obtained via a fingerprint scanner (e.g. via a touch screen), facial recognition via a camera of the client device 100, voice recognition via a microphone of the client device 100, or the like. In some embodiments, the authentication input may be stored in a protected storage of the client device 100 accessed via a biometric authentication input. The authentication input may have an associated device identifier and/or an associated authentication type indicating the type of authentication input, such as a password, fingerprint, retinal scan, swipe input, and the like.

The client-side processor system 130 may be configured to compute a protected authentication input by applying a non-invertible, deterministic function, such as a key derivation function, to the obtained authentication input.

The client-side communication interface 120 may send a message, or multiple messages, to the server 200. In some embodiments, the message may be a request for retrieving a stored password factor. In some embodiments, the client-side communication interface 120 may transmit information on the authentication input, such as an authentication type and/or a device identifier identifying the client device 100. In some embodiments such as that described in detail with regard to Figure 6a, the client-side communication interface 120 may further transmit, in the same transmission (e.g. message) or in an additional transmission, the protected authentication input. However, the transmission of the protected authentication input is not required in all embodiments, and an alternative embodiment in which the protected authentication input is not transmitted to the server 200 is described in detail with reference to Figure 6b. In some embodiments, for example if the authentication type is a biometric authentication type, e.g. fingerprint, facial recognition, retinal scan etc, the client-side communication interface 120 may further transmit a device identifier identifying the client device 100 to the server 200.

The server 200, e.g. the server-side communication interface 230, may retrieve the stored password factor from the database stored in the database storage 210, for example using the received authentication type and/or the device identifier. In some embodiments, account information identifying the user's account with the password management system may be received from the client device 100 and also used to retrieve the stored password factor.

In some embodiments, the client-side communication interface 120 may be configured to transmit application information, e.g. information associated with the password-protected resource 20 such as a URL or the like. The application information may be obtained from the password-protected resource 20 by the client device 100 prior to transmission to the server 200.

The server-side processor system 230 may be configured to compute an application-based password component from the application information. For example, the application-based password component may be computed by applying a deterministic function, preferably a non-invertible deterministic function, to the application information and, in some embodiments, a seed or user account information associated with the user 10's account in the password management system.

In some embodiments, the server-side processor system 230 may be configured to compute a user-based password component from the protected authentication input and the stored password factor which has been retrieved from the database in the database storage 210. The user-based password component may be calculated by combining the protected authentication input and the stored password factor using an invertible, deterministic function. In embodiments where the computation of the user-based password component is performed by the server 200, the client device 200 (e.g. the client-side communication interface 120) may be configured to transmit the protected authentication input to the server 200.

In some alternative embodiments, the client-side processor system 130 may be configured to compute the user-based password component. In such embodiments, the server-side communication interface 220 may be configured to transmit, to the client device 100, the retrieved stored password factor. The client-side processor system 130 may then compute the user-based password component from the stored password factor and the protected authentication input, for example by applying an invertible, deterministic function thereto. In such embodiments, it is not necessary for the client device 100 to transmit the protected authentication input to the server 200.

Once the user-based password component has been computed, either at the server 200 or at the client device 100, the user-based password component may be combined with the application-based password component calculated by the server 200. The user-based password component and the application-based password component may be combined, for example, by applying a deterministic function thereto, the deterministic function preferably being non-invertible.

In some embodiments, the user-based password component and the application-based password component may be combined by the client-side processor system 130. In such embodiments, the server-side communication interface 220 may be configured to transmit, to the client device 100, the computed application-based password component. A password may then be reconstructed from the combination of the user-based password component and the application-based password component by the client-side processor system 130.

In other embodiments, the user-based password component and the application-based password component may both be computed by the server-side processor system 230, in which case the server-side processor system 230 may be configured to combine the user-based password component and the application-based password component, and to reconstruct a password from the combination of the user-based password. In such embodiments, the server-side processor system 230 may be configured to reconstruct the password and transmit the reconstructed password to the client device 100, for example through a backend channel or in an encrypted form.

In some embodiments, either the client-side processor system 130 or the server-side processor system 230 may be configured to adjust the reconstructed password. One or more password requirements may be obtained from the password-protected resource, by either the client-side communication interface 120 or by the server-side communication interface 220. In some embodiments, the one or more password requirements may be obtained by the client device 100 from the password-protected resource 20 and may be used by the client device 100, or may be transmitted to the server 200. The one or more password requirements may comprise, for example, a minimum and/or maximum password length, character requirements, such as a number of uppercase or lowercase letters, numbers, special characters, and the like.

In some embodiments, the client-side processor system 130 may be configured to reconstruct the password as described above, and may be further configured to adjust the reconstructed password using the one or more password requirements associated with the password-protected resource 20.

In some embodiments, the server-side processor system 230 may be configured to reconstruct the password as described above, and may be further configured to adjust the reconstructed password using the one or more password requirements associated with the password-protected resource 20. For example, the one or more password requirements may be obtained from the server 200. For example, the one or more password requirements may be stored when the user account with the password-protected resource is created, or at another time. The server-side communication interface 230 may be configured to transmit the adjusted password to the client device 100, for example via a backend channel or in an encrypted form or the like.

In some embodiments, the server-side processor system 230 may be configured to reconstruct the password as described above, and the server-side communication interface 220 may be configured to transmit the reconstructed password to the client device 100. The client-side communication interface 120 may be configured to obtain the one or more password requirements, for example from the server 200, and the client-side processor system 130 may be configured to adjust the received password according to the one or more password requirements. That is, the password may be reconstructed on the server side, and adjusted on the device side.

The methods of reconstructing a password for accessing the password-protected server 20 will be further elucidated with reference to Figures 6a and 6b, and the additional aspect of adjusting the password will be described in detail with reference to Figures 7a and 7b.

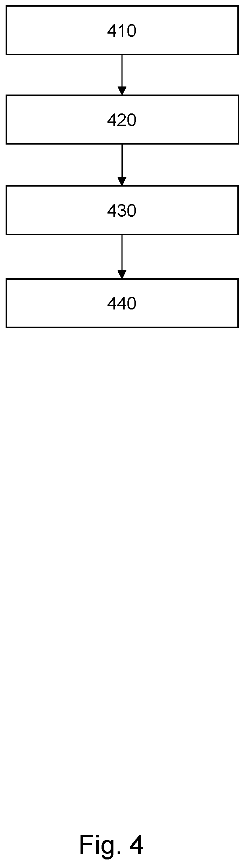

**Figure 4** schematically shows an example of an embodiment of a method of enrolling a device in a password management system.

The enrolment of a device in the password management system may be performed in one of at least two ways, depending on whether the user's account with the password management system has an associated previously enrolled device. That is, the method of enrolling a first device, e.g. a first enrolment, differs from the method of enrolling a second or subsequent device. Although throughout this description reference is made to enrolling a device, it is to be understood that a single device may have multiple enrolments, e.g. corresponding to different authentication inputs. That is, in essence, an authentication input may be enrolled. However, enrolling a device either as a first enrolment or as a subsequent enrolment may be performed using four main operations as illustrated in Figure 4.

The method comprises, in a first operation entitled "OBTAIN AUTHENTICATION INPUT", obtaining 410 an authentication input, for example from a user prompted to input an authentication input. In some embodiments, the authentication input may be obtained from protected storage of the client device 100, accessed for example using a biometric authentication means, e.g. fingerprint scanning. In some embodiments, the authentication input may be a password input into a keyboard or touchpad of the client device 100 by a user 10. In some embodiments, the authentication input may be a passphrase spoken into a microphone of the client device 100 by a user 10, for example using speech recognition. In some embodiments, obtaining the authentication input may comprise obtaining, from the user 10, a biometric input such as a fingerprint, retinal scan, facial recognition, voice recognition or the like, which may enable access to a protected storage of the client device 100 in which an authentication input, e.g. a string, is stored. In some embodiments, obtaining the authentication input may comprise obtaining a user identifier using continuous authentication, for example from a protected storage of the client device 100. In some embodiments, the operation of obtaining the authentication input may further comprise computing a protected authentication input from the authentication input by applying a non-invertible, deterministic function to the authentication input.

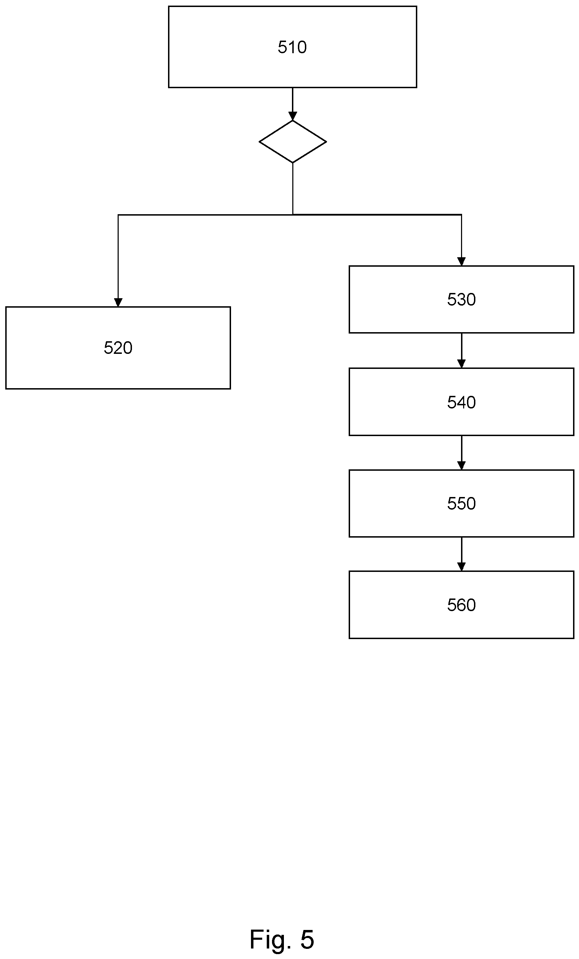

The method comprises, in an operation entitled "OBTAIN USER-BASED PASSWORD COMPONENT", obtaining 420 a user-based password component. Depending on whether the enrolment being performed is a first enrolment or a subsequent enrolment, the method of obtaining the user-based password component may differ. The operation of obtaining 420 the user-based password component is illustrated in more detail in **Figure 5.**

Referring now to Figure 5, in some embodiments, the client device 100 may query the server 200 to determine, in operation 510, whether there are any previous enrolments associated with the user's account with the password management system. In some embodiments, this query operation may be omitted, for example if the user has, immediately preceding the enrolment, registered for a new account with the password management system.

In operation 510, the server 200 may check whether the user's account has at least one previously enrolled device, for example by checking for entries in database 215.

If there are no previous enrolments, e.g. if there are no devices previously enrolled for the user's account, then the method of Figure 5 continues to operation 520. That is, if the enrolment being performed is a first enrolment, the user-based password component is obtained in operation 520. The method comprises, in an operation entitled "GENERATE USER-BASED PASSWORD COMPONENT", generating 520 a user-based password component as a random number. That is, the client device 100 may generate a random number to be the user-based password component.

Otherwise, if there is at least one previous enrolment, e.g. there is already a device that has already been enrolled for the user's account in the password management system, the method of Figure 5 continues to operation 530. The method comprises, in an operation entitled "RETRIEVE PREVIOUSLY STORED PASSWORD FACTOR", retrieving 530 a previously stored password factor. The previously stored factor may be associated with a previous enrolment. If there are multiple previous enrolments, one previous enrolment may be chosen as a default, for example a previous enrolment associated with a password, or text-based, authentication type, or a default previous enrolment may be selected by a user.

The method may then comprise, in an operation entitled "PROMPT USER FOR PREVIOUS AUTHENTICATION INPUT", requesting 540 the user to provide the previous authentication input, e.g. the authentication input associated with the previous enrolment. The user 10 may then input the authentication input used in the previous enrolment. Preferably, the previous authentication input is a text-based authentication, e.g. having a text-based authentication type. A text-based authentication input such as a password may be advantageous if the previous enrolment involved a different client device, as the same authentication input (e.g. same text-based password) may be obtained by different devices. In some embodiments, a biometric input (e.g. a fingerprint) provided on one device may not lead to the same authentication input string on a first device as that obtained by inputting the same biometric input (e.g. the same fingerprint) on a second device. In such cases, it is advantageous to use a previous enrolment in which a text-based authentication such as a password is used, to ensure that the same authentication input is received from one device to another.

It is to be noted, however, that the previous enrolment may be on the same device as the client device being used in the current enrolment, for example using a different authentication type. In such a case, the previous enrolment may be any authentication input, such as a fingerprint, retina scan, facial recognition, voice recognition or the like.

The method may comprise, in an operation entitled "COMPUTE PREVIOUS PROTECTED AUTHENTICATION INPUT", computing 550 a previous protected authentication input from the received previous authentication input. The previous protected authentication input may be obtained by applying the non-invertible deterministic function, e.g. function 330, to the previous authentication input received from the user 10.

The method may comprise, in an operation entitled "CALCULATE USER-BASED PASSWORD COMPONENT", calculating 560 a user-based password component from the retrieved stored password factor and the previous protected authentication input. The user-based password component may be calculated by combining the retrieved stored password factor and the previous protected authentication using an invertible, deterministic function.

Returning now to Figure 4, once the user-based password component is obtained, the method of Figure 4 may comprise, in an operation entitled "CALCULATE PASSWORD FACTOR", calculating 430 a password factor from the obtained user-based password component and the protected authentication input. The password factor may be computed by applying the invertible, deterministic function to the user-based password component and the protected authentication input. In operation 440, entitled "STORE CALCULATED PASSWORD FACTOR", the computed password factor may be stored 440, for example in the database 215. Storing the calculated password factor may comprise transmitting the calculated password factor to the server prior to storage of the calculated password factor.

In some embodiments, the method may further comprise a confirmation step in which the server 200 may transmit a message to the client device 100 after the calculated password factor is stored, confirming the successful enrolment.

**Figures 6a and 6b** schematically show examples of embodiments of a password reconstruction method. In the embodiment depicted in Figure 6a, the password for accessing a password-protected resource may be reconstructed by the server 200, whereas in the embodiment depicted in Figure 6b, the password for accessing the password-protected resource may be reconstructed by the client device 100. In both embodiments, the components used to reconstruct the password are distributed, which provides an advantage that the password cannot be obtained if one of the client device 100 and the server 200 is compromised.

The method may comprise, in an operation entitled "OBTAIN APPLICATION INFORMATION", obtaining 610, by the client device 100, application information associated with the password-protected resource 20. Application information may comprise a URL of the password-protected resource 20, an identifier identifying the password-protected resource 20 or the like.

The method may comprise, in an operation entitled "OBTAIN AUTHENTICATION INPUT", obtaining 620, by the client device 100, an authentication input from a user, e.g. user 10. The authentication input may have an associated device identifier and/or an associated authentication type, indicating the type of authentication input provided by the user 10. Examples of authentication types include a password, or text-based input, a touch-based input such as a swipe pattern, a biometric input such as a fingerprint authentication, facial recognition, retinal scan, voice recognition and the like. In some embodiments, the authentication input may comprise a value stored in a protected storage of the client device 100, which is accessed, for example, using biometric authentication means. For example, the user 10 may provide a fingerprint as an input to the client device 100. If the fingerprint provided by the user 10 matches a fingerprint previously registered with the client device 10 (for example, client device 10 may already be configured to be unlocked by a fingerprint input), a protected storage 140 of the client device 100. The protected storage 140 may store a string or code, and said string or code may be used as the authentication input throughout the methods described herein.

The method may comprise, in an operation entitled "COMPUTE PROTECTED AUTHENTICATION INPUT", computing 630, by the client device 100, a protected authentication input from the authentication input obtained in operation 620. The protected authentication input may be computed by applying a non-invertible, deterministic function to the obtained authentication input. In some embodiments, for example when the authentication input is obtained from a protected storage 140 of the client device 100, the protected authentication input may be the authentication input itself, e.g. computing the protected authentication input may comprise applying the identity function to the authentication input. In some embodiments, computing the protected authentication input may comprise obtaining seed, e.g. a seed associated with the user's account with the password management system, combining the seed with the authentication input, and applying a function to the combination of the seed and the authentication input. Said function may be an identity function, or, in some embodiments, a non-invertible deterministic function such as a key derivation function.

It should be noted that although operation 610 is depicted as preceding operations 620 and 630, operation 610 may be performed at any time prior to operation 640a, e.g. simultaneously or substantially simultaneously with operation 620 and/or 630.

The method may comprise, in an operation entitled "SEND MESSAGE TO SERVER", transmitting 640a, 640b a message, or a plurality of messages, from the client device 100 to the server 200. The content of the message, or plurality of messages or transmissions, may differ between the embodiment shown in Figure 6a and that of Figure 6b.

**Password reconstruction on server**

Referring first to the embodiment of **Figure 6a,** in which the password is reconstructed by the server 200, operation 640a comprises transmitting, by the client device 100 to the server 200, the protected authentication input, application information associated with the password-protected resource 20, and in some embodiments, an authentication type indicating the type of the authentication input and/or a device identifier identifying the client device 100. In some embodiments, account information identifying the account of the user 10 with the password management system may also be transmitted from the client device 100 to the server 200. Although depicted as a single operation, operation 640a may comprise one or more transmissions from the client device 100 to the server 200.

The method may comprise, in an operation entitled "RETRIEVE STORED PASSWORD FACTOR", retrieving 650 a stored password factor from a database such as the database stored in database storage 210. The server 200 may retrieve the stored password factor using the information received from the client device 100, such as the authentication type and/or a device identifier identifying the client device 100. In some embodiments, account information identifying the account of the user 10 with the password management system may be used to retrieve the stored password factor. In some embodiments, the authentication input- and therefore the protected authentication input- obtained when a first authentication type (e.g. a fingerprint) is used on a first client device, e.g. client device 100-2, may differ from the authentication input obtained when that same authentication type (e.g. fingerprint) is used on a second client device, e.g. client device 100-3. In such cases, the device identifier may be used to retrieve the stored password factor associated with the authentication type and the client device 100. For example, a fingerprint input on a first client device may provide access to an authentication input in the protected storage of the first client device. The authentication input may have been previously randomly generated or uniquely generated. A fingerprint input on a second client device may provide access to an authentication input in the protected storage of the second client device, and the authentication input of the second client device may not match that of the first client device. The authentication inputs may be randomly or uniquely generated by each device prior to being stored in the protected storage. In some embodiments, different types of operating systems or applications on the client device(s) may handle biometric inputs differently, such that the authentication input obtained as a result of a biometric input may vary from one client device to another.

The method may comprise, in an operation entitled "COMPUTE APPLICATION-BASED PASSWORD COMPONENT", computing 660 the application-based password component. The server 200 may compute the application-based password component from the application information. In some embodiments, account information identifying the user's account in the password management system may also be used in the computation of the application-based password component. The application-based password component may be computed by applying an invertible or non-invertible deterministic function to the application information and, optionally, the account information associated with the password management system account of the user 10. The calculation of the application-based password component is described in detail in European patent EP3476077.

It is to be noted that, although depicted sequentially, operations 650 and 660 may be performed in any order, simultaneously or substantially simultaneously.

The method may comprise, in an operation entitled "COMPUTE USER-BASED PASSWORD COMPONENT", computing 670a, by the server 200, a user-based password component from the protected authentication input and the retrieved stored password factor. The user-based password component may be computed by applying an invertible, deterministic function to the protected authentication and the retrieved stored password factor.

The method may comprise, in an operation entitled "RECONSTRUCT PASSWORD", reconstructing 680a, by the server 200, the password for accessing the password-protected resource 20. The password may be reconstructed by combining the user-based password component and the application-based password component, for example by applying a deterministic function to the user-based password component and the application-based password component. The reconstructed password may also be referred to as a raw password. In some embodiments, the reconstructed password may be used directly to access the password-protected resource 20. In other embodiments, the reconstructed password may be adapted or adjusted to obtain an adjusted password for accessing the password-protected resource 20. Adjusting the reconstructed password will be described with reference to Figures 7a and 7b.

The method may comprise, in an operation entitled "TRANSMIT PASSWORD", transmitting 690a the reconstructed password from the server 200 to the client device 100. In some embodiments, the reconstructed password may be transmitted via a backend channel. In some embodiments, the reconstructed password may be encrypted prior to being transmitted to the client device 100.

*Example*

Returning to the previous example, the user 10 may wish to access an online shop with which he has an account.

The user 10 may, on his mobile phone, access a login page for the online shop, for example in a browser or in an application on the mobile phone. The user may then activate, or select, the password management system, which may be a browser plug-in, extension, application, or the like. The user 10 may then input his fingerprint as a means of authentication. The user's mobile phone may then compare the received fingerprint with fingerprint data used for fingerprint authentication on the mobile phone, and upon determining that the fingerprint matches the fingerprint data, may access the protected storage of the mobile phone, and thereby access the authentication input, which may be a vector in this example.

The user's mobile phone may compute the protected authentication input and transmit the protected authentication input, the associated authentication type and a device identifier identifying the mobile phone to the server 200. The server 200 may then retrieve the stored password factor associated with a fingerprint authentication on the mobile phone. The server 200 may then compute the user-based password component by combining the received protected authentication input and the retrieved stored password factor. Combining may comprise, for example, a sum, a summing modulo a modulus, an XOR, or any other invertible operation.

The server 200 may also obtain application information, such as the URL of the online shop that the user 10 wishes to access. The server 200 may calculate an application-based password component from the obtained application information, and optionally from information of the user's password management system account. The server 200 may then reconstruct a password by combining the user-based password component and the application-based password component. The server 200 may then transmit the reconstructed password to the user's mobile phone. The reconstructed password may then be forwarded or input into the online shop access page. In some embodiments, however, the reconstructed password may be adjusted using one or more password requirements associated with the online shop, and the adjusted password may be used to access the online shop. Adjusting the password will be described with reference to Figures 7a or 7b.

**Password reconstruction on client device**

Referring now to the embodiment shown in Figure 6b, in which the password is reconstructed on the client device 100, operation 640b may comprise transmitting, by the client device 100 to the server 200, application information associated with the password-protected resource 20 and, in some embodiments, information on the authentication input, such as a device identifier identifying the client device 100 and/or the authentication type indicating the type of the authentication input. That is, the protected authentication input need not be transmitted from the client device 100 to the server 200. In some embodiments, a device identifier identifying the client device 100 may also be transmitted from the client device 100 to the server 200. In some embodiments, account information identifying the account of the user 10 with the password management system may also be transmitted from the client device 100 to the server 200. Although depicted as a single operation, operation 640b may comprise one or more transmissions from the client device 100 to the server 200.

The method may comprise, in an operation entitled "RETRIEVE STORED PASSWORD FACTOR", retrieving 650 a stored password factor from a database such as the database stored in database storage 210. The server 200 may retrieve the stored password factor using the information received from the client device 100, which may include the authentication type and/or a device identifier identifying the client device 100. In some embodiments, account information identifying the account of the user 10 with the password management system may be used to retrieve the stored password factor. In some embodiments, the authentication input - and therefore the protected authentication input- obtained when a first authentication type (e.g. a fingerprint) is used on a first client device, e.g. client device 100-2, may differ from the authentication input obtained when that same authentication type (e.g. fingerprint) is used on a second client device, e.g. client device 100-3. In such cases, the device identifier may be used to retrieve the stored password factor associated with the authentication type and the client device 100. For example, a fingerprint input on a first client device may provide access to an authentication input in the protected storage of the first client device. The authentication input may have been previously randomly generated or uniquely generated. A fingerprint input on a second client device may provide access to an authentication input in the protected storage of the second client device, and the authentication input of the second client device may not match that of the first client device. The authentication inputs may be randomly or uniquely generated by each device prior to being stored in the protected storage. In some embodiments, different types of operating systems or applications on the client device(s) may handle biometric inputs differently, such that the authentication input obtained as a result of a biometric input may vary from one client device to another.

The method may comprise, in an operation entitled "COMPUTE APPLICATION-BASED PASSWORD COMPONENT", computing 660 the application-based password component. The server 200 may compute the application-based password component from the application information. In some embodiments, account information identifying the user's account in the password management system may also be used in the computation of the application-based password component. The application-based password component may be computed by applying an invertible or non-invertible deterministic function to the application information and, optionally, the account information associated with the password management system account of the user 10. The calculation of the application-based password component is described in detail in European patent EP3476077.

It is to be noted that, although depicted sequentially, operations 650 and 660 may be performed in any order, simultaneously or substantially simultaneously.

The method may comprise, in an operation entitled "TRANSMIT PASSWORD RECONSTRUCTION INFORMATION", transmitting 665, from the server 200 to the client device 100, information for reconstructing the password. The information for reconstructing the password may comprise the stored password factor and the computed application-based password component. In some embodiments, the stored password factor and the computed application-based password component are transmitted from the server 200 to the client device 100 in separate transmissions, and in other embodiments a single transmission comprising both the stored password factor and the application-based password component may be sent. In some embodiments, one or both of the stored password factor and the application-based password component may be sent via a backend channel to the client device 100, and/or in an encrypted form.

The method may comprise, in an operation entitled "CALCULATE USER-BASED PASSWORD COMPONENT", computing 670b, by the client device 100, a user-based password component from the protected authentication input and the received stored password factor. The user-based password component may be computed by applying an invertible, deterministic function to the protected authentication and the retrieved stored password factor. In this embodiment, since the user-based password component is computed by the client device 100, there is no need for the protected authentication input to be transmitted to the server 200. Avoiding an unnecessary transmission of the protected authentication input, which is a value used to reconstruct the password for accessing the password-protected resource, thus reduces the risk of interception and improves security. Moreover, in such a case, the server 200 would not receive the protected authentication input, meaning that the protected authentication input would remain secure even if the server 200 were compromised.

The method may comprise, in an operation entitled "RECONSTRUCT PASSWORD", reconstructing 680b, by the client device 100, the password for accessing the password-protected resource 20. The password may be reconstructed by combining the computed user-based password component and the received application-based password component, for example by applying a deterministic function to the user-based password component and the application-based password component. The reconstructed password may also be referred to as a raw password. In some embodiments, the reconstructed password may be used directly to access the password-protected resource 20. In other embodiments, the reconstructed password may be adapted or adjusted to obtain an adjusted password for accessing the password-protected resource 20. Adjusting the reconstructed password will be described with reference to Figure 7b.

*Example*

In the previous example, the user's password for the online shop was computed by the server. However, as described above, the user's password for the online may instead be computed by the user's mobile phone.

As in the example above, the user 10 may, on his mobile phone, access a login page for the online shop, for example in a browser or in an application on the mobile phone. The user may then activate, or select, the password management system, which may be a browser plug-in, extension, application, or the like. The user 10 may then input his fingerprint as a means of authentication. The user's mobile phone may then compare the received fingerprint with fingerprint data used for fingerprint authentication on the mobile phone, and upon determining that the fingerprint matches the fingerprint data, may access the protected storage of the mobile phone, and thereby access the authentication input, which may be a vector in this example.

The user's mobile phone may compute the protected authentication input, but in this case, the user's mobile phone may merely transmit the associated authentication type and a device identifier identifying the mobile phone to the server 200. That is, the protected authentication input is not transmitted to the server 200 in this example. The server 200 may then retrieve the stored password factor associated with a fingerprint authentication on the mobile phone. The server 200 may then transmit the retrieved stored password factor to the mobile phone. Unlike in the previous example, the server 200 does not compute the user-based password component, since in this example, the server 200 has not been provided with the protected authentication input.

The server 200 may also obtain application information, such as the URL of the online shop that the user 10 wishes to access. The server 200 may calculate an application-based password component from the obtained application information, and optionally from information of the user's password management system account. The server 200 may then transmit the application-based password component to the mobile phone. The application-based password component may be transmitted simultaneously with the retrieved stored password factor in some cases.

The user's mobile phone may then compute the user-based password component from the received stored password factor and the protected authentication input, and may then reconstruct the password from the user-based password component and the received application-based password component. The reconstructed password may then be used to access the online shop. In some embodiments, however, the reconstructed password may be adjusted using one or more password requirements associated with the online shop, and the adjusted password may be used to access the online shop. Adjusting the password will be described with reference to Figure 7b.

**Figures 7a and 7b** schematically show examples of embodiments of a method of adjusting a reconstructed password. In the embodiment depicted in Figure 7a, the reconstructed password is adjusted by the server 200, whereas in the embodiment depicted in Figure 7b, the reconstructed password is adjusted by the client device 100.

The embodiment of Figure 7a may be considered an optional progression of the method of Figure 6a, e.g. the method of reconstructing a password on the server side. The embodiment depicted in Figure 7b may be considered an optional progression of the method of either Figure 6a or Figure 6b.

Referring first to the embodiment of Figure 7a, the method may comprise, in an operation entitled "OBTAIN PASSWORD REQUIREMENT(S)", obtaining 710a at least one password requirement. The server 200 may obtain the at least one password requirement, for example from a memory of the server or a remote memory accessible by the server 200. Although the operation of obtaining at least one password requirement is depicted in Figure 7a as occurring after the password has been reconstructed, e.g. after operation 680a as shown in Figure 6a, it is to be understood that the operation 710a of obtaining the password requirement(s) of the password-protected resource 20 may occur at any time prior to adjusting the password. For example, the password requirement(s) of the password-protected resource 20 may be obtained when the user 10 creates an account with the password-protected resource 20 and said password requirement(s) may be stored remotely, such as in the database storage 210 of the server 200, or in a further remote entity.

The method may comprise, in an operation entitled "ADJUST PASSWORD", adjusting 720a the password using the obtained at least one password requirement. In embodiments in which the server 200 is configured to adjust the reconstructed password, the operation of adjusting the password may be performed prior to the password being transmitted to the client device 100. The at least one password requirement may comprise, for example, a minimum password length, a maximum password length, a character requirement, such as a number of uppercase and lowercase letters, numbers, special characters etc., and the like. Adjusting the password may comprise shortening the reconstructed password in accordance with a maximum password length and/or a minimum password length, replacing one or more characters with one or more special characters, numbers, or uppercase letters or the like. The adjusted password may be suitable for accessing the password-protected resource 20.

Once the adjusted password is obtained in operation 720a, the adjusted password may be transmitted to the client device 100 in operation 690a', which is similar to the operation of 690a described with reference to Figure 6a, although in operation 690a' the adjusted password is transmitted, rather than the merely reconstructed password. The transmission of the adjusted password from the server 200 to the client device 100 may be performed via a backend channel, and/or the adjusted password may be encrypted prior to transmission.

Referring now to the embodiment of Figure 7b, the method may comprise, in an operation entitled "OBTAIN PASSWORD REQUIREMENT(S)", obtaining 710b at least one password requirement. The client device 100 may obtain the at least one password requirement from the server 200. Although depicted as occurring after either the password is reconstructed in operation 680b or the password is received from the server 200 in operation 690a, it is to be understood that the operation 710b of obtaining the password requirement(s) of the password-protected resource 20 may occur at any time prior to adjusting the password. For example, the password requirement(s) of the password-protected resource 20 may be obtained when the user 10 creates an account with the password-protected resource 20 and said password requirement(s) may be stored for example, in the database storage 210 of the server 200, or in a further remote entity.

The method may comprise, in an operation entitled "ADJUST PASSWORD", adjusting 720b the password using the obtained at least one password requirement. In embodiments in which the client device 100 is configured to reconstruct the password, the operation of adjusting the password may be performed after the password is reconstructed in operation 680b. In some embodiments, the server 200 may be configured to reconstruct the password, and to transmit the reconstructed password to the client device 100 in operation 690a'. In such embodiments, the client device 100 may be configured to adjust the reconstructed password after the reconstructed password is received from the server 200 in operation 690a. The at least one password requirement may comprise, for example, a minimum password length, a maximum password length, a character requirement, such as a number of uppercase and lowercase letters, numbers, special characters etc., and the like. Adjusting the password may comprise shortening the reconstructed password in accordance with a maximum password length and/or a minimum password length, replacing one or more characters with one or more special characters, numbers, or uppercase letters or the like. The adjusted password may be suitable for accessing the password-protected resource 20.

*Example*

Returning to the example introduced previously, the online shop may have a maximum password length (e.g. no more than 20 characters) and a requirement of at least one special character and one uppercase letter.

Once the password has been reconstructed, the password may be adjusted using these limitations, which may be obtained from the online shop (e.g. from the application of the online shop, or from its website). Either the user's mobile phone or the server 200 may adjust the length of the password, for example by selecting the first 20 characters of the reconstructed password and deleting the rest. The user's mobile phone or the server 200 may further adjust the password by randomly selecting one or more characters to swap with an uppercase version of the same character (if applicable), or with a special character. The adjusted password may then be used to access the online shop.

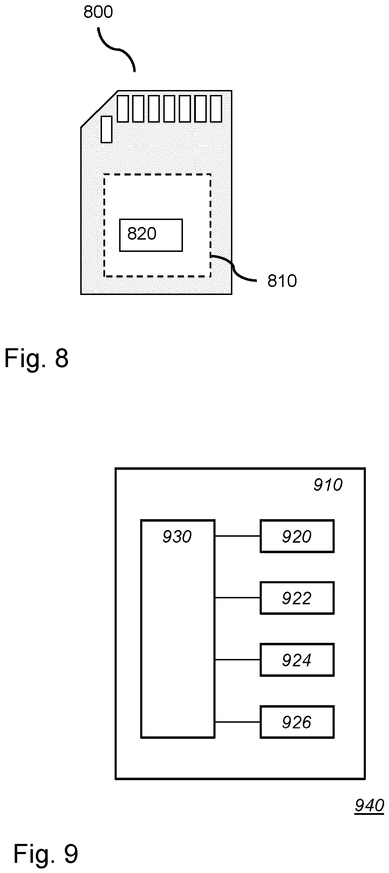

**Figure 8** shows a computer readable medium 800 having a writable part 810 comprising a computer program 820, the computer program 820 comprising instructions for causing a processor system to perform a method, such as any or all of the methods of Figures 4, 5, 6a, 6b, 7a and 7b. The computer program 820 may be embodied on the computer readable medium 800 as physical marks or by magnetization of the computer readable medium 800. However, any other suitable embodiment is conceivable as well. Furthermore, it will be appreciated that, although the computer readable medium 800 is shown here as an SD card, the computer readable medium 800 may be any suitable computer readable medium, such as a compact disk, a hard disk, solid state memory, flash memory, etc., and may be non-recordable or recordable. The computer program 820 comprises instructions for causing a processor system to perform said method of encrypting and/or decrypting authentication information.

**Figure 9** shows in a schematic representation of a processor system 940, an example of a client-side processor system 130 or a server-side processor system 230, according to embodiments of the client device 100 and the server 200 shown in Figure 2. The processor system 940 comprises one or more integrated circuits 910. Circuit 910 comprises a processing unit 920, e.g., a CPU, for running computer program components to execute a method according to an embodiment and/or implement its modules or units. Circuit 910 comprises a memory 922 for storing programming code, data, etc. Part of memory 922 may be read-only. Circuit 910 may comprise a communication element 926, e.g., an antenna, connectors or both, and the like. Circuit 910 may comprise a dedicated integrated circuit (IC) 924 for performing part or all of the processing defined in the method. Processor 920, memory 922, dedicated IC 924 and communication element 926 may be connected to each other via an interconnect 930, for example a bus. The processor system 910 may be arranged for contact and/or contact-less communication, using an antenna and/or connectors, respectively.

For example, in an embodiment, processor system 940, e.g., the client-side processor system 130 and/or the server-side processor system 230 as shown in Figure 2, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While the processor system 940 is shown as including one of each described component, the various components may be duplicated in various embodiments. For example, the processor 920 may include multiple microprocessors that are configured to independently execute the methods described herein or are configured to perform steps or subroutines of the methods described herein such that the multiple processors cooperate to achieve the functionality described herein. Further, where the client device 100 and/or the server 200 is implemented in a cloud computing system, the various hardware components may belong to separate physical systems. For example, the processor 920 may include a first processor in a first server and a second processor in a second server.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A password management system for reconstructing a password for accessing a password-protected resource, the password management system comprising:

   - a client device comprising:

     - a client-side communication interface configured to:

       - receive an authentication input from a user of the client device, and
       - send, to a server device of the password management system, application information indicating the password-protected resource for which password reconstruction is requested; and

     - a client-side processor system configured to:

       - apply a non-invertible deterministic function to the authentication input to obtain a protected authentication input;

   - the server device comprising:

     - a database storage configured to store a database comprising stored password factors for corresponding protected authentication inputs, wherein a same user-based password component is obtained from each of the stored password factors and the corresponding protected authentication input;
     - a server-side communication interface configured to:

       - receive, from the client device, the application information, and
       - retrieve, from the database, the stored password factor corresponding to the protected authentication input; and

     - a server-side processor system configured to:

       - compute an application-based password component from the application information;

   wherein the client-side processor system or the server-side processor system is further configured to reconstruct a password by:

       - calculating a user-based password component by combining the retrieved stored password factor and the protected authentication input using an invertible, deterministic function; and
       - combining the user-based password component and the application-based password component to generate the password.

2. The password management system of claim 1, wherein the client-side processor system is configured to reconstruct the password, and wherein the server-side communication interface is further configured to transmit the retrieved stored password factor to the client device.

3. The password management system of claim 1, wherein the server-side processor system is configured to reconstruct the password, and wherein:

   - the client-side communication interface is further configured to send, to the server component, the protected authentication information, and
   - the server-side communication interface is further configured to transmit the password to the client device.

4. The password management system of any preceding claim, wherein the server-side processor system is configured to:

   - obtain account information associated with a user account in the password management system, and
   - compute the application-based password component by retrieving a registration identifier from the database using the account information and computing the application-based password component from the application information and the registration identifier.

5. The password management system of any preceding claim, wherein either the client-side processor system or the server-side processor system is further configured to:

   - obtain at least one password requirement associated with the password-protected resource; and
   - adjust the password using the obtained at least one password requirement to obtain a final password.

6. The password management system of any preceding claim, wherein the client-side communication interface is further configured to send, to the server, at least one of an authentication type of the authentication input and a device identifier identifying the client device, and wherein the server-side communication interface is configured to retrieve the stored password factor from the database using the at least one of the authentication type and the device identifier.

7. A device for logging in to a password-protected resource, the device being enrolled in a password management service, the password management service being hosted on a remote server, the device comprising:

   - a communication interface configured to:

       - obtain an authentication input from a user of the device;

   - obtain application information of the password-protected resource;
   - transmit, to the remote server, the application information;

       - retrieve, from the remote server, a stored password factor from a database, the database comprising stored password factors for corresponding protected authentication inputs, wherein a same user-based password component is obtained from each of the stored password factors and the corresponding protected authentication input, the stored password factor being associated with the protected authentication input; and
       - receive, from the remote server, an application-based password component, the application-based password component being computed from the application information; and
   - a processor system configured to:

       - apply a non-invertible, deterministic function to the authentication input to obtain a protected authentication input;
       - compute a user-based password component from the retrieved stored password factor and the protected authentication input using an invertible, deterministic function; and
       - generate the password by combining the user-based password component with the application-based password component.

8. A server of a password management system for reconstructing a password for accessing a password-protected resource, the server comprising:

   - a database storage configured to store a database comprising stored password factors for corresponding protected authentication inputs, wherein a same user-based password component is obtained from each of the stored password factors and the corresponding protected authentication input;
   - a communication interface configured to:

       - receive, from a client device enrolled in the password management service, application information and a protected authentication input;

   - a database interface configured to retrieve a stored password factor corresponding to the protected authentication input from the database; and
   - a processor system configured to:

       - compute a user-based password component from the retrieved stored password factor and the protected authentication input using an invertible, deterministic function;
       - compute an application-based password component from the application information; and
       - generate the password by combining the user-based password component and the application-based password component.

9. The password management system of claims 1-6, the device of claim 7 or the server of claim 8, wherein the authentication input comprises at least one of a master password, a certificate, a random number stored in a protected storage area of the client device accessed by a biometric input, continuous authentication and a swipe input.

10. The password management system of claims 1-6 or the device of claim 7, wherein the device is further configured to receive, from another device, a request to generate a password for the password-protected resource and/or the application information.

11. A method for reconstructing, by a device, a password for accessing a password-protected resource using a password management system, the method comprising:

- obtaining an authentication input from a user of the device;
- obtaining application information of the password-protected resource;
- applying a non-invertible, deterministic function to the authentication input to obtain a protected authentication input;
- transmitting, to a remote server of the password management system, the application information;
- receiving, from a database, a stored password factor associated with the protected authentication input, the database storing a plurality of stored password factors for corresponding protected authentication inputs, wherein a same user-based password component is obtained from each of the stored password factors and the corresponding protected authentication input;
- computing a user-based password component from the stored password factor and the protected authentication input using an invertible, non-deterministic function;
- receiving, from the remote server, an application-based password component generated from application information; and
- generating a password by combining the user-based password component and the application-based password component.

12. A method for reconstructing, by a server of a password management system, a password for accessing a password-protected resource, the method comprising:

- storing, in a database of the server, a plurality of stored password factors for corresponding protected authentication inputs, wherein a same user-based password component is obtained from each of the stored password factors and the corresponding protected authentication input;
- receiving, from a client device enrolled in the password management system, the application information and a protected authentication input;
- retrieving, from the database, a stored password factor associated with the protected authentication input;
- computing a user-based password component from the retrieved stored password factor and the protected authentication input using an invertible, deterministic function;
- computing an application-based password component from the application information; and
- generating the password by combining the user-based password component and the application-based password component.

13. A device for enrolling in a password management service, a user of the device having an account with the password management service, the device comprising:

- an input component configured to receive an authentication input from a user;
- a processor subsystem configured to:

- apply a non-invertible, deterministic function to the authentication input to obtain a protected authentication input;
- obtain a user-based password component;
- calculate a password factor from the protected authentication input and the user-based password component using an invertible, deterministic function;

- a communication unit configured to:

- transmit, to a server hosting the password management service, an enrolment request for determining whether the account has at least one existing enrolment;

- receive, from the server, an indication of whether the account has at least one existing enrolment; and
- transmit, to the server, the password factor and account information, the account information identifying the account of the user of the device;

wherein if the account does not have at least one existing enrolment, the processor subsystem is configured to obtain the user-based password component by randomly generating the user-based password component; and

wherein if the account has at least one existing enrolment, the processor subsystem is configured to obtain the user-based password component by:

- receiving, from the server, a previous password factor, the previous password factor corresponding to a previous enrolment,
- requesting a previous authentication input from the user, the previous authentication input being an authentication input associated with the previous enrolment;
- applying a non-invertible, deterministic function to the previous authentication input to obtain a previous protected authentication input; and
- determining the user-based password component by combining the previous password factor and the previous protected authentication component using an invertible, deterministic function.

14. The device of claim 13, wherein the previous authentication input comprises a password and wherein the authentication input comprises a random number stored in a protected storage area of the device accessed by a biometric input.

15. A method for enrolling a device in a password management service, a user of the device having an account with the password management service, the method comprising:

- receiving an authentication input from a user;
- applying a non-invertible, deterministic function to the authentication input to obtain a protected authentication input;
- determining whether the account has at least one previously enrolled device;
- if the account does not have at least one previously enrolled device, randomly generating a user-based password component;
- if the account has at least one previously enrolled device, obtaining the user-based password component by:

- retrieving a previous password factor, the previous password factor corresponding to a previously enrolled device,
- requesting a previous authentication input from the user, the previous authentication input being an authentication input used at the time of enrolling the previously enrolled device;
- applying a non-invertible, deterministic function to the previous authentication input to obtain a previous protected authentication input; and
- determining the user-based password component by combining the previous password factor and the previous protected authentication component using an invertible, deterministic function;
- calculating a password factor from the protected authentication input and the user-based password component using an invertible, deterministic function; and
- storing the password factor in a database linking the password factor to account information, the account information identifying the account of the user of the device.

16. The method of claim 15, wherein the previous authentication input comprises a password and wherein the authentication input comprises a random number stored in a protected storage area of the device accessed by a biometric input.

17. A transitory or non-transitory computer readable medium comprising data representing instructions, which when executed by a processor system, cause the processor system to perform the method according to one of claims 11, 12, 15 and 16.

**Patentansprüche**

1. Ein Passwortverwaltungssystem zum Rekonstruieren eines Passworts zum Zugreifen auf eine passwortgeschützte Ressource, wobei das Passwortverwaltungssystem Folgendes umfasst:

- eine Client-Vorrichtung, umfassend:

- eine clientseitige Kommunikationsschnittstelle, die konfiguriert ist zum:

- Empfangen einer Authentifizierungseingabe von einem Benutzer der Client-Vorrichtung, und
- Senden an eine Server-Vorrichtung des Passwortverwaltungssystems von Anwendungsinformationen, die die passwortgeschützte Ressource, für die Passwortrekonstruktion angefordert wird, angeben; und

- ein clientseitiges Prozessorsystem, das dazu konfiguriert ist:

- eine nicht-invertierbare deterministische Funktion an die Authentifizierungseingabe anzuwenden, um eine geschützte Authentifizierungseingabe zu erhalten;

- die Server-Vorrichtung, umfassend:

- eine Datenbankspeicherung, die dazu konfiguriert ist, eine Datenbank zu speichern, die gespeicherte Passwortfaktoren für entsprechende geschützte Authentifizierungseingaben umfasst, wobei eine gleiche benutzerbasierte Passwortkomponente aus jedem der gespeicherten Passwortfaktoren und der entsprechenden geschützten Authentifizierungseingabe erhalten wird;
- eine serverseitige Kommunikationsschnittstelle, die dazu konfiguriert ist:

- von der Client-Vorrichtung die Anwendungsinformationen zu empfangen, und
- aus der Datenbank den gespeicherten Passwortfaktor, der der geschützten Authentifizierungseingabe entspricht, abzurufen; und

- ein serverseitiges Prozessorsystem, das dazu konfiguriert ist:

- eine anwendungsbasierte Passwortkomponente aus den Anwendungsinformationen zu berechnen;

wobei das clientseitige Prozessorsystem oder das serverseitige Prozessorsystem weiter dazu konfiguriert ist, ein Passwort zu rekonstruieren durch:

- Berechnen einer benutzerbasierten Passwortkomponente durch Kombinieren des abgerufenen gespeicherten Passwortfaktors und der geschützten Authentifizierungseingabe unter Verwendung einer invertierbaren deterministischen Funktion; und
- Kombinieren der benutzerbasierten Passwortkomponente und der anwendungsbasierten Passwortkomponente, um das Passwort zu erzeugen.

2. Das Passwortverwaltungssystem nach Anspruch 1, wobei das clientseitige Prozessorsystem dazu konfiguriert ist, das Passwort zu rekonstruieren, und wobei die serverseitige Kommunikationsschnittstelle weiter dazu konfiguriert ist, den abgerufenen gespeicherten Passwortfaktor an die Client-Vorrichtung zu übertragen.

3. Das Passwortverwaltungssystem nach Anspruch 1, wobei das serverseitige Prozessorsystem dazu konfiguriert ist, das Passwort zu rekonstruieren, und wobei:

- die clientseitige Kommunikationsschnittstelle weiter dazu konfiguriert ist, die geschützten Authentifizierungsinformationen an die Serverkomponente zu senden, und
- die serverseitige Kommunikationsschnittstelle weiter dazu konfiguriert ist, das Passwort an die Client-Vorrichtung zu übertragen.

4. Das Passwortverwaltungssystem nach einem vorstehenden Anspruch, wobei das serverseitige Prozessorsystem dazu konfiguriert ist:

- Kontoinformationen, die einem Benutzerkonto in dem Passwortverwaltungssystem zugeordnet sind, zu erhalten, und

- die anwendungsbasierte Passwortkomponente durch Abrufen einer Registrierungskennung aus der Datenbank unter Verwendung der Kontoinformationen und Berechnen der anwendungsbasierten Passwortkomponente aus den Anwendungsinformationen und der Registrierungskennung zu berechnen.

5. Das Passwortverwaltungssystem nach einem vorstehenden Anspruch, wobei entweder das clientseitige Prozessorsystem oder das serverseitige Prozessorsystem weiter dazu konfiguriert ist:

- mindestens eine Passwortanforderung, die der passwortgeschützten Ressource zugeordnet ist, zu erhalten; und
- das Passwort unter Verwendung der erhaltenen mindestens einen Passwortanforderung zum Erhalten eines endgültigen Passworts anzupassen.

6. Das Passwortverwaltungssystem nach einem vorstehenden Anspruch, wobei die clientseitige Kommunikationsschnittstelle weiter dazu konfiguriert ist, an den Server mindestens eines eines Authentifizierungstyps der Authentifizierungseingabe und einer Vorrichtungskennung, die die Client-Vorrichtung identifiziert, zu senden, und wobei die serverseitige Kommunikationsschnittstelle dazu konfiguriert ist, den gespeicherten Passwortfaktor aus der Datenbank unter Verwendung des mindestens einen des Authentifizierungstyps und der Vorrichtungskennung abzurufen.

7. Eine Vorrichtung zum Einloggen in eine passwortgeschützte Ressource, wobei die Vorrichtung bei einem Passwortverwaltungsdienst angemeldet ist, wobei der Passwortverwaltungsdienst auf einem entfernten Server gehostet wird, wobei die Vorrichtung Folgendes umfasst:

- eine Kommunikationsschnittstelle, die konfiguriert ist zum:

- Erhalten einer Authentifizierungseingabe von einem Benutzer der Vorrichtung;
- Erhalten von Anwendungsinformationen der passwortgeschützten Ressource,
- Übertragen der Anwendungsinformationen an den entfernten Server;
- Abrufen von dem entfernten Server eines gespeicherten Passwortfaktors von einer Datenbank, wobei die Datenbank gespeicherte Passwortfaktoren für entsprechende geschützte Authentifizierungseingaben umfasst, wobei eine gleiche benutzerbasierte Passwortkomponente von jedem der gespeicherten Passwortfaktoren und der entsprechenden geschützten Authentifizierungseingabe erhalten wird, wobei der gespeicherte Passwortfaktor der geschützten Authentifizierungseingabe zugeordnet ist, und
- Empfangen von dem entfernten Server einer anwendungsbasierten Passwortkomponente, wobei die anwendungsbasierte Passwortkomponente aus den Anwendungsinformationen berechnet ist, und

- ein Prozessorsystem, das dazu konfiguriert ist:

- eine nicht-invertierbare deterministische Funktion an die Authentifizierungseingabe anzuwenden, um eine geschützte Authentifizierungseingabe zu erhalten;
- eine benutzerbasierte Passwortkomponente aus dem abgerufenen gespeicherten Passwortfaktor und der geschützten Authentifizierungseingabe unter Verwendung einer invertierbaren deterministischen Funktion zu berechnen; und
- das Passwort durch Kombinieren der benutzerbasierten Passwortkomponente mit der anwendungsbasierten Passwortkomponente zu erzeugen.

8. Ein Server eines Passwortverwaltungssystems zum Rekonstruieren eines Passworts zum Zugreifen auf eine passwortgeschützte Ressource, wobei der Server Folgendes umfasst:

- eine Datenbankspeicherung, die dazu konfiguriert ist, eine Datenbank zu speichern, die gespeicherte Passwortfaktoren für entsprechende geschützte Authentifizierungseingaben umfasst, wobei eine gleiche benutzerbasierte Passwortkomponente aus jedem der gespeicherten Passwortfaktoren und der entsprechenden geschützten Authentifizierungseingabe erhalten wird;
- eine Kommunikationsschnittstelle, die konfiguriert ist zum:

- Empfangen von einer Client-Vorrichtung, die bei dem Passwortverwaltungsdienst angemeldet ist, von Anwendungsinformationen und einer geschützten Authentifizierungseingabe;

- eine Datenbankschnittstelle, die dazu konfiguriert ist, einen gespeicherten Passwortfaktor, der der geschützten Authentifizierungseingabe entspricht, aus der Datenbank abzurufen; und
- ein Prozessorsystem, das dazu konfiguriert ist:

- eine benutzerbasierte Passwortkomponente aus dem abgerufenen gespeicherten Passwortfaktor und der geschützten Authentifizierungseingabe unter Verwendung einer invertierbaren deterministische Funktion zu berechnen;
- eine anwendungsbasierte Passwortkomponente aus den Anwendungsinformationen zu berechnen; und
- ein Passwort durch Kombinieren der benutzerbasierten Passwortkomponente und der anwendungsbasierten Passwortkomponente zu erzeugen.

9. Das Passwortverwaltungssystem nach den Ansprüchen 1-6, die Vorrichtung nach Anspruch 7 oder der Server nach Anspruch 8, wobei die Authentifizierungseingabe mindestens eines eines Master-Passworts, eines Zertifikats, einer Zufallszahl, die in einem geschützten Speicherbereich der Client-Vorrichtung gespeichert ist, auf den durch eine biometrische Eingabe zugegriffen wird, kontinuierliche Authentifizierung und Durchzieheingabe umfasst.

10. Das Passwortverwaltungssystem nach den Ansprüchen 1-6 oder die Vorrichtung nach Anspruch 7, wobei die Vorrichtung weiter dazu konfiguriert ist, von einer anderen Vorrichtung eine Anforderung zum Erzeugen eines Passworts für die passwortgeschützte Ressource und/oder die Anwendungsinformationen zu empfangen.

11. Ein Verfahren zum Rekonstruieren durch eine Vorrichtung eines Passworts zum Zugreifen auf eine passwortgeschützte Ressource unter Verwendung eines Passwortverwaltungssystem, wobei das Verfahren Folgendes umfasst:

- Erhalten einer Authentifizierungseingabe von einem Benutzer der Vorrichtung;
- Erhalten von Anwendungsinformationen der passwortgeschützten Ressource,
- Anwenden einer nicht-invertierbaren deterministischen Funktion an die Authentifizierungseingabe, um eine geschützte Authentifizierungseingabe zu erhalten;
- Übertragen der Anwendungsinformationen an einen entfernten Server des Passwortverwaltungssystems;
- Empfangen von einer Datenbank eines gespeicherten Passwortfaktors, der der geschützten Authentifizierungseingabe zugeordnet ist, wobei die Datenbank eine Vielzahl gespeicherter Passwortfaktoren für entsprechende geschützte Authentifizierungseingaben speichert, wobei eine gleiche benutzerbasierte Passwortkomponente von jedem der gespeicherten Passwortfaktoren und der entsprechenden geschützten Authentifizierungseingabe erhalten wird;
- Berechnen einer benutzerbasierten Passwortkomponente aus dem gespeicherten Passwortfaktor und der geschützten Authentifizierungseingabe unter Verwendung einer invertierbaren, nicht deterministischen Funktion;
- Empfangen von dem entfernten Server einer anwendungsbasierten Passwortkomponente, die aus Anwendungsinformationen erzeugt wird; und
- Erzeugen eines Passworts durch Kombinieren der benutzerbasierten Passwortkomponente und der anwendungsbasierten Passwortkomponente.

12. Ein Verfahren zum Rekonstruieren durch einen Server eines Passwortverwaltungssystems eines Passworts zum Zugreifen auf eine passwortgeschützte Ressource, wobei das Verfahren Folgendes umfasst:

- Speichern in einer Datenbank des Servers einer Vielzahl gespeicherter Passwortfaktoren für entsprechende geschützte Authentifizierungseingaben, wobei eine gleiche benutzerbasierte Passwortkomponente von jedem der gespeicherten Passwortfaktoren und der entsprechenden geschützten Authentifizierungseingabe erhalten wird;
- Empfangen von einer Client-Vorrichtung, die bei dem Passwortverwaltungsdienst angemeldet ist, der Anwendungsinformationen und einer geschützten Authentifizierungseingabe;
- Abrufen aus der Datenbank eines gespeicherten Passwortfaktors, der der geschützten Authentifizierungseingabe zugeordnet ist,
- Berechnen einer benutzerbasierten Passwortkomponente aus dem abgerufenen gespeicherten Passwortfaktor und der geschützten Authentifizierungseingabe unter Verwendung einer invertierbaren, deterministischen Funktion;
- Berechnen einer anwendungsbasierten Passwortkomponente aus den Anwendungsinformationen, und
- Erzeugen des Passworts durch Kombinieren der benutzerbasierten Passwortkomponente und der anwendungsbasierten Passwortkomponente.

13. Eine Vorrichtung zum Anmelden bei einem Passwortverwaltungsdienst, wobei ein Benutzer der Vorrichtung ein Konto bei dem Passwortverwaltungsdienst aufweist, wobei die Vorrichtung Folgendes umfasst:

- eine Eingabekomponente, die dazu konfiguriert ist, von einem Benutzer eine Authentifizierungseingabe zu empfangen;
- ein Prozessorteilsystem, das dazu konfiguriert ist:

- eine nicht-invertierbare deterministische Funktion an die Authentifizierungseingabe anzuwenden, um eine geschützte Authentifizierungseingabe zu erhalten;
- eine benutzerbasierte Passwortkomponente zu erhalten;
- einen Passwortfaktor aus der geschützten Authentifizierungseingabe und der benutzerbasierten Passwortkomponente unter Verwendung einer invertierbaren, deterministischen Funktion zu berechnen;

- eine Kommunikationseinheit, die konfiguriert ist zum:

- Übertragen an einen Server, der den Passwortverwaltungsdienst hostet, einer Anmeldungsanforderung zum Bestimmen, ob das Konto mindestens eine bestehende Anmeldung aufweist;
- Empfangen von dem Server einer Angabe dazu, ob das Konto mindestens eine bestehende Anmeldung aufweist; und
- Übertragen an den Server des Passwortfaktors und der Kontoinformationen, wobei die Kontoinformationen das Konto des Benutzers der Vorrichtung identifizieren;

wobei, wenn das Konto nicht mindestens eine bestehende Anmeldung aufweist, das Prozessorteilsystem dazu konfiguriert ist, die benutzerbasierte Passwortkomponente durch zufälliges Erzeugen der benutzerbasierten Passwortkomponente zu erhalten; und
wobei, wenn das Konto mindestens eine bestehende Anmeldung aufweist, das Prozessorteilsystem dazu konfiguriert ist, die benutzerbasierte Passwortkomponente zu erhalten durch:

- Empfangen von dem Server eines vorherigen Passwortfaktors, wobei der vorherige Passwortfaktor einer vorherigen Anmeldung entspricht,
- Anfordern einer vorherigen Authentifizierungseingabe von dem Benutzer, wobei die vorherige Authentifizierungseingabe eine Authentifizierungseingabe ist, die der vorherigen Anmeldung zugeordnet ist;
- Anwenden einer nicht-invertierbaren deterministischen Funktion an die vorherige Authentifizierungseingabe, um eine vorherige geschützte Authentifizierungseingabe zu erhalten; und
- Bestimmen der benutzerbasierten Passwortkomponente durch Kombinieren des vorherigen Passwortfaktors und der vorherigen geschützten Authentifizierungskomponente unter Verwendung einer invertierbaren, deterministische Funktion.

14. Die Vorrichtung nach Anspruch 13, wobei die vorherige Authentifizierungseingabe ein Passwort umfasst, und wobei die Authentifizierungseingabe eine Zufallszahl umfasst, die in einem geschützten Speicherbereich der Vorrichtung, auf den durch eine biometrische Eingabe zugegriffen wird, gespeichert ist.

15. Ein Verfahren zum Anmelden bei einem Passwortverwaltungsdienst einer Vorrichtung, wobei ein Benutzer der Vorrichtung ein Konto bei dem Passwortverwaltungsdienst aufweist, wobei das Verfahren Folgendes umfasst:

- Empfangen einer Authentifizierungseingabe von einem Benutzer;
- Anwenden einer nicht-invertierbaren deterministischen Funktion an die Authentifizierungseingabe, um eine geschützte Authentifizierungseingabe zu erhalten;
- Bestimmen, ob das Konto mindestens eine vorherige angemeldete Vorrichtung aufweist;
- wenn das Konto nicht mindestens eine vorherige angemeldete Vorrichtung aufweist, zufälliges Erzeugen einer benutzerbasierten Passwortkomponente;
- wenn das Konto mindestens eine vorherige angemeldete Vorrichtung aufweist, Erhalten der benutzerbasierten Passwortkomponente durch:

- Abrufen eines vorherigen Passwortfaktors, wobei der vorherige Passwortfaktor einer vorher angemeldeten Vorrichtung entspricht,
- Anfordern einer vorherigen Authentifizierungseingabe von dem Benutzer, wobei die vorherige Authentifizierungseingabe eine Authentifizierungseingabe ist, die zum Zeitpunkt des Anmeldens der vorher angemeldeten Vorrichtung verwendet wird;
- Anwenden einer nicht-invertierbaren deterministischen Funktion an die vorherige Authentifizierungseingabe, um eine vorherige geschützte Authentifizierungseingabe zu erhalten; und
- Bestimmen der benutzerbasierten Passwortkomponente durch Kombinieren des vorherigen Passwortfaktors und der vorherigen geschützten Authentifizierungskomponente unter Verwendung einer invertierbaren, deterministischen Funktion;

- Berechnen eines Passwortfaktors aus der geschützten Authentifizierungseingabe und der benutzerbasierten Passwortkomponente unter Verwendung einer invertierbaren, deterministischen Funktion; und
- Speichern des Passwortfaktors in einer Datenbank, die den Passwortfaktor mit Kontoinformationen verbindet, wobei die Kontoinformationen das Konto des Benutzers der Vorrichtung identifizieren.

16. Das Verfahren nach Anspruch 15, wobei die vorherige Authentifizierungseingabe ein Passwort umfasst, und wobei die Authentifizierungseingabe eine Zufallszahl umfasst, die in einem geschützten Speicherbereich der Vorrichtung, auf den durch eine biometrische Eingabe zugegriffen wird, gespeichert ist.

17. Ein flüchtiges oder nichtflüchtiges computerlesbares Medium, das Daten umfasst, die Anweisungen darstellen, die, wenn sie von einem Prozessorsystem ausgeführt werden, das Prozessorsystem dazu veranlassen, das Verfahren nach einem der Ansprüche 11, 12, 15 und 16 durchzuführen.

**Revendications**

1. Un système de gestion de mot de passe pour reconstruire un mot de passe afin d'accéder à une ressource protégée par mot de passe, le système de gestion de mot de passe comprenant :

- un dispositif client, comprenant :

- une interface de communication côté client configurée pour :

- recevoir une entrée d'authentification en provenance d'un utilisateur du dispositif client, et
- envoyer, à un dispositif serveur du système de gestion de mot de passe, des informations d'application indiquant la ressource protégée par mot de passe pour laquelle une reconstruction de mot de passe est demandée ; et

- un système de processeur côté client configuré pour :

- appliquer une fonction déterministe non inversible à l'entrée d'authentification afin d'obtenir une entrée d'authentification protégée ;

- le dispositif serveur comprenant :

- un stockage de base de données configuré pour stocker une base de données comprenant des facteurs de mot de passe stockés pour des entrées d'authentification protégées correspondantes, dans lequel un même composant de mot de passe basé sur un utilisateur est obtenu à partir de chacun des facteurs de mot de passe stockés et de l'entrée d'authentification protégée correspondante ;
- une interface de communication côté serveur configurée pour :

- recevoir, en provenance du dispositif client, les informations d'application, et
- récupérer, à partir de la base de données, le facteur de mot de passe stocké correspondant à l'entrée d'authentification protégée ; et

- un système de processeur côté serveur configuré pour :

- calculer un composant de mot de passe basé sur une application à partir des informations d'application ;

dans lequel le système de processeur côté client ou le système de processeur côté serveur est en outre configuré pour reconstruire un mot de passe par l'intermédiaire des étapes consistant à :

- calculer un composant de mot de passe basé sur un utilisateur en combinant le facteur de mot de passe stocké récupéré et l'entrée d'authentification protégée en utilisant une fonction déterministe inversible ; et
- combiner le composant de mot de passe basé sur un utilisateur et le composant de mot de passe basé sur une application pour générer le mot de passe.

2. Le système de gestion de mot de passe selon la revendication 1, dans lequel le système de processeur côté client est configuré pour reconstruire le mot de passe, et dans lequel l'interface de communication côté serveur est en outre configurée pour transmettre le facteur de mot de passe stocké récupéré au dispositif client.

3. Le système de gestion de mot de passe selon la revendication 1, dans lequel le système de processeur côté serveur est configuré pour reconstruire le mot de passe, et dans lequel :

- l'interface de communication côté client est en outre configurée pour envoyer, au composant de serveur, les informations d'authentification protégées, et
- l'interface de communication côté serveur est en outre configurée pour transmettre le mot de passe au dispositif client.

4. Le système de gestion de mot de passe selon une quelconque revendication précédente, dans lequel le système de processeur côté serveur est configuré pour :

- obtenir des informations de compte associées à un compte d'utilisateur dans le système de gestion de mot de passe, et
- calculer le composant de mot de passe basé sur une application en récupérant un identifiant d'enregistrement à partir de la base de données en utilisant les informations de compte et en calculant le composant de mot de passe basé sur une application à partir des informations d'application et de l'identifiant d'enregistrement.

5. Le système de gestion de mot de passe selon une quelconque revendication précédente, dans lequel soit le système de processeur côté client soit le système de processeur côté serveur est en outre configuré pour :

- obtenir au moins une exigence de mot de passe associée à la ressource protégée par mot de passe ; et
- ajuster le mot de passe en utilisant la au moins une exigence de mot de passe obtenue pour obtenir un mot de passe final.

6. Le système de gestion de mot de passe selon une quelconque revendication précédente, dans lequel l'interface de communication côté client est en outre configurée pour envoyer, au serveur, au moins un certain parmi un type d'authentification de l'entrée d'authentification et un identifiant de dispositif identifiant le dispositif client, et dans lequel l'interface de communication côté serveur est configurée pour récupérer le facteur de mot de passe stocké à partir de la base de données en utilisant le au moins un certain parmi le type d'authentification et l'identifiant de dispositif.

7. Un dispositif pour se connecter à une ressource protégée par mot de passe, le dispositif étant inscrit dans un service de gestion de mot de passe, le service de gestion de mot de passe étant hébergé sur un serveur distant, le dispositif comprenant :

- une interface de communication configurée pour :

- obtenir une entrée d'authentification en provenance d'un utilisateur du dispositif,
- obtenir des informations d'application de la ressource protégée par mot de passe ;
- transmettre, au serveur distant, les informations d'application ;
- récupérer, à partir du serveur distant, un facteur de mot de passe stocké à partir d'une base de données, la base de données comprenant des facteurs de mot de passe stockés pour des entrées d'authentification protégées correspondantes, dans lequel un même composant de mot de passe basé sur un utilisateur est obtenu à partir de chacun des facteurs de mot de passe stockés et de l'entrée d'authentification protégée correspondante, le facteur de mot de passe stocké étant associé à l'entrée d'authentification protégée ; et
- recevoir, en provenance du serveur distant, un composant de mot de passe basé sur une application, le composant de mot de passe basé sur une application étant calculé à partir des informations d'application ; et

- un système de processeur configuré pour :

  - appliquer une fonction déterministe non inversible à l'entrée d'authentification afin d'obtenir une entrée d'authentification protégée ;
  - calculer un composant de mot de passe basé sur un utilisateur à partir du facteur de mot de passe stocké récupéré et de l'entrée d'authentification protégée en utilisant une fonction déterministe inversible ; et
  - générer le mot de passe en combinant le composant de mot de passe basé sur un utilisateur avec le composant de mot de passe basé sur un application.

8. Un serveur d'un système de gestion de mot de passe pour reconstruire un mot de passe afin d'accéder à une ressource protégée par mot de passe, le serveur comprenant :

  - un stockage de base de données configuré pour stocker une base de données comprenant des facteurs de mot de passe stockés pour des entrées d'authentification protégées correspondantes, dans lequel un même composant de mot de passe basé sur un utilisateur est obtenu à partir de chacun des facteurs de mot de passe stockés et de l'entrée d'authentification protégée correspondante ;
  - une interface de communication configurée pour :

    - recevoir, en provenance d'un dispositif client inscrit dans le service de gestion de mot de passe, des informations d'application et une entrée d'authentification protégée ;

  - une interface de base de données configurée pour récupérer, à partir de la base de données, un facteur de mot de passe stocké correspondant à l'entrée d'authentification protégée ; et
  - un système de processeur configuré pour :

    - calculer un composant de mot de passe basé sur un utilisateur à partir du facteur de mot de passe stocké récupéré et de l'entrée d'authentification protégée en utilisant une fonction déterministe inversible ;
    - calculer un composant de mot de passe basé sur une application à partir des informations d'application ; et
    - générer le mot de passe en combinant le composant de mot de passe basé sur un utilisateur et le composant de mot de passe basé sur un application.

9. Le système de gestion de mot de passe selon les revendications 1-6, le dispositif selon la revendication 7 ou le serveur selon la revendication 8, dans lequel l'entrée d'authentification comprend au moins un certain parmi un mot de passe maître, un certificat, un nombre aléatoire stocké dans une zone de stockage protégée du dispositif client accessible par une entrée biométrique, une authentification continue et une entrée de balayage.

10. Le système de gestion de mot de passe selon les revendications 1-6 ou le dispositif selon la revendication 7, dans lequel le dispositif est en outre configuré pour recevoir, en provenance d'un autre dispositif, une demande pour générer un mot de passe pour la ressource protégée par mot de passe et/ou les informations d'application.

11. Un procédé pour reconstruire, par l'intermédiaire d'un dispositif, un mot de passe afin d'accéder à une ressource protégée par mot de passe en utilisant un système de gestion de mot de passe, le procédé comprenant les étapes consistant à :

  - obtenir une entrée d'authentification en provenance d'un utilisateur du dispositif ;
  - obtenir des informations d'application de la ressource protégée par mot de passe ;
  - appliquer une fonction déterministe non inversible à l'entrée d'authentification afin d'obtenir une entrée d'authentification protégée ;
  - transmettre, à un serveur distant du système de gestion de mot de passe, les informations d'application ;
  - recevoir, à partir d'une base de données, un facteur de mot de passe stocké associé à l'entrée d'authentification protégée, la base de données stockant une pluralité de facteurs de mot de passe stockés pour des entrées d'authentification protégées correspondantes, dans lequel un même composant de mot de passe basé sur un utilisateur est obtenu à partir de chacun des facteurs de mot de passe stockés et de l'entrée d'authentification protégée correspondante ;
  - calculer un composant de mot de passe basé sur un utilisateur à partir du facteur de mot de passe stocké et de l'entrée d'authentification protégée en utilisant une fonction déterministe inversible ;
  - recevoir, à partir du serveur distant, un composant de mot de passe basé sur une application généré à partir des informations d'application ; et

- générer un mot de passe en combinant le composant de mot de passe basé sur un utilisateur et le composant de mot de passe basé sur une application.

12. Un procédé pour reconstruire, par l'intermédiaire d'un serveur d'un système de gestion de mot de passe, un mot de passe afin d'accéder à une ressource protégée par mot de passe, le procédé comprenant les étapes consistant à :

- stocker, dans une base de données du serveur, une pluralité de facteurs de mot de passe stockés pour des entrées d'authentification protégées correspondantes, dans lequel un même composant de mot de passe basé sur un utilisateur est obtenu à partir de chacun des facteurs de mot de passe stockés et de l'entrée d'authentification protégée correspondante ;
- recevoir, en provenance d'un dispositif client inscrit dans le service de gestion de mot de passe, les informations d'application et une entrée d'authentification protégée ;
- récupérer, à partir de la base de données, un facteur de mot de passe stocké correspondant à l'entrée d'authentification protégée ;
- calculer un composant de mot de passe basé sur un utilisateur à partir du facteur de mot de passe stocké récupéré et de l'entrée d'authentification protégée en utilisant une fonction déterministe inversible ;
- calculer un composant de mot de passe basé sur une application à partir des informations d'application ; et
- générer le mot de passe en combinant le composant de mot de passe basé sur un utilisateur et le composant de mot de passe basé sur une application.

13. Un dispositif pour inscrire dans un système de gestion de mot de passe, un utilisateur du dispositif présentant un compte avec le service de gestion de mot de passe, le dispositif comprenant :

- un composant d'entrée configuré pour recevoir une entrée d'authentification en provenance d'un utilisateur ;
- un sous-système de processeur configuré pour :

- appliquer une fonction déterministe non inversible à l'entrée d'authentification afin d'obtenir une entrée d'authentification protégée ;
- obtenir un composant de mot de passe basé sur un utilisateur ;
- calculer un facteur de mot de passe à partir de l'entrée d'authentification protégée et du composant de mot de passe basé sur un utilisateur en utilisant une fonction déterministe inversible ;

- une unité de communication configurée pour :

- transmettre, à un serveur hébergeant le service de gestion de mot de passe, une demande d'inscription pour déterminer si le compte présente au moins une inscription existante ;
- recevoir, en provenance du serveur, une indication si le compte présente au moins une inscription existante ; et
- transmettre, au serveur, le facteur de mot de passe et les informations de compte, les informations de compte identifiant le compte de l'utilisateur du dispositif ;

dans lequel, si le compte ne présente pas au moins une inscription existante, le sous-système de processeur est configuré pour obtenir le composant de mot de passe basé sur un utilisateur en générant de manière aléatoire le composant de mot de passe basé sur un utilisateur ; et

dans lequel, si le compte présente au moins une inscription existante, le sous-système de processeur est configuré pour obtenir le composant de mot de passe basé sur un utilisateur par l'intermédiaire des étapes consistant à :

- recevoir, en provenance du serveur, un facteur de mot de passe précédent, le facteur de mot de passe précédent correspondant à une inscription précédente,
- demander une entrée d'authentification précédente de l'utilisateur, l'entrée d'authentification précédente étant une entrée d'authentification associée à l'inscription précédente ;
- appliquer une fonction déterministe non inversible à l'entrée d'authentification précédente afin d'obtenir une entrée d'authentification protégée précédente ; et
- déterminer le composant de mot de passe basé sur un utilisateur en combinant le facteur de mot de passe précédent et le composant d'authentification protégé précédent en utilisant une fonction déterministe inversible.

**14.** Le dispositif selon la revendication 13, dans lequel l'entrée d'authentification précédente comprend un mot de passe et dans lequel l'entrée d'authentification comprend un nombre aléatoire stocké dans une zone de stockage protégée du dispositif accessible par une entrée biométrique.

**15.** Un procédé pour inscrire dans un système de gestion de mot de passe un dispositif, dans lequel un utilisateur du dispositif présente un compte avec le service de gestion de mot de passe, le procédé comprenant les étapes consistant à :

- recevoir une entrée d'authentification en provenance d'un utilisateur ;
- appliquer une fonction déterministe non inversible à l'entrée d'authentification afin d'obtenir une entrée d'authentification protégée ;
- déterminer si le compte présente au moins un dispositif précédemment inscrit ;
- si le compte ne présente pas au moins un dispositif précédemment inscrit, générer de manière aléatoire un composant de mot de passe basé sur un utilisateur ;
- si le compte présente au moins un dispositif précédemment inscrit, obtenir le composant de mot de passe basé sur un utilisateur par l'intermédiaire des étapes consistant à :

- récupérer un facteur de mot de passe précédent, le facteur de mot de passe précédent correspondant à un dispositif précédemment inscrit,
- demander une entrée d'authentification précédente en provenance de l'utilisateur, l'entrée d'authentification précédente étant une entrée d'authentification utilisée au moment de l'inscription du dispositif précédemment inscrit ;
- appliquer une fonction déterministe non inversible à l'entrée d'authentification précédente afin d'obtenir une entrée d'authentification protégée précédente ; et
- déterminer le composant de mot de passe basé sur un utilisateur en combinant le facteur de mot de passe précédent et le composant d'authentification protégée précédent en utilisant une fonction déterministe inversible ;

- calculer un facteur de mot de passe à partir de l'entrée d'authentification protégée et du composant de mot de passe basé sur un utilisateur en utilisant une fonction déterministe inversible ; et
- stocker le facteur de mot de passe dans une base de données liant le facteur de mot de passe aux informations de compte, les informations de compte identifiant le compte de l'utilisateur du dispositif.

**16.** Le procédé selon la revendication 15, dans lequel l'entrée d'authentification précédente comprend un mot de passe et dans lequel l'entrée d'authentification comprend un nombre aléatoire stocké dans une zone de stockage protégée du dispositif accessible par une entrée biométrique.

**17.** Un support lisible par ordinateur transitoire ou non transitoire comprenant des données représentant des instructions qui, lorsqu'elles sont exécutées par un système de processeur, amènent le système de processeur à mettre en oeuvre le procédé selon l'une des revendications 11, 12, 15 et 16.

Fig. 1

Fig. 2

Fig. 3

Fig. 4

Fig. 5

Fig. 6a

Fig. 6b

Fig. 7a

Fig. 7b

800

820

810

Fig. 8

910

930

920

922

924

926

940

Fig. 9

**EP 4 264 877 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3476077 B1
- US 9104889 B

- EP 3476077 A